# EUROPEAN PATENT APPLICATION

(11) **EP 4 604 336 A1**
(43) Date of publication of application: **20.08.2025**
(21) Application number: 23877310.5
(22) Date of filing: 11.10.2023
(51) Int. Cl.: H02G 1/14, H01R 43/28

(54) **MULTI-CORE SHIELDED CABLE MACHINING DEVICE**

(30) Priority: 14.10.2022 JP 2022165888
(71) Applicant: ShinMaywa Industries, Ltd., Takarazuka-shi, Hyogo 665-8550 (JP)
(72) Inventor: SHIRAI, Hiroaki, Takarazuka-shi, Hyogo 665-8550 (JP); TAKAHASHI, Yoshiki, Takarazuka-shi, Hyogo 665-8550 (JP); OKADA, Morihiro, Takarazuka-shi, Hyogo 665-8550 (JP)
(74) Representative: Grünecker Patent- und Rechtsanwälte PartG mbB
(86) International application number: PCT/JP2023/036891
(87) International publication number: WO 2024/080307

(57) **Abstract**

A processing device 10 for a multi-core shielded cable 1 includes a first-step processing device 10A that strips a sheath 2, a detection device 140 that detects the position of a drain wire 3 in the circumferential direction, a second-step processing device 10B that processes the tip portions of electric wires 3 and 4, a relay device 150 that relays the multi-core shielded cable 1 between the first-step processing device 10A and the second-step processing device 10B, a positioning device 100, and a controller 200. The positioning device 100 includes a first gripping device 160R that grips the multi-core shielded cable 1, and a first rotating device 170R that rotates the multi-core shielded cable 1 gripped by the first gripping device 160R. The controller 200 controls the positioning device 100 based on the detection results from the detection device 140 to drive at least the first rotating device 170R and to thereby move the drain wire 3 to a predetermined position in the circumferential direction.

## Description

### TECHNICAL FIELD

The present invention relates to a processing device for a multi-core shielded cable.

### BACKGROUND ART

Methods for processing drain wires of multi-core shielded cables having drain wires have been proposed in the art. For example, PTL 1 discloses a process of crimping a terminal to a drain wire that has been pulled out of the sheath and folded in half.

PTL 2 discloses a manufacturing device that performs, in this order for a multi-core cable (twisted cable) having a sheath: a sheath stripping step; an untwisting step of untwisting core wires; a direction adjusting and unkinking step of unkinking the kinks in the core wires; a core wire length adjusting step; a core wire sheath stripping step; and a terminal connecting step. The manufacturing device disclosed in PLT 2 includes a plurality of fixed chucks that are arranged along the conveying path of the multi-core cable to hold the multi-core cable, and a movable chuck that holds the multi-core cable and reciprocates between the fixed chucks. The multi-core cable is conveyed through the plurality of fixed chucks from one to another by the movable chuck while being curved in a U-letter shape. The multi-core cable is thus conveyed between the steps.

### CITATION LIST

### PATENT LITERATURE

PTL 1: JP 2007-207738 A
PTL 1: JP 2019-179675 A

### SUMMARY OF INVENTION

### TECHNICAL PROBLEM

Of the processes performed for a multi-core shielded cable having a drain wire and a plurality of core wires covered by a sheath, in the step of processing the tip portion such as crimping a terminal to the drain wire and the core wires, for example, electric wires are processed individually. Therefore, it is preferred that the drain wire and the core wires are individually recognized before the tip portion processing step. Since the processing for the drain wire and the processing for the core wires are often different, it is necessary that at least the drain wire and the core wires are recognized distinctively.

The present invention has been made in view of the above, and an object thereof is to provide a processing device for a multi-core shielded cable that is configured to distinguish between the drain wire and the core wires before processing the tip portion, and to provide a processing device for a multi-core shielded cable that is made more efficient as a device.

### SOLUTION TO PROBLEM

A processing device for a multi-core shielded cable according to the present invention includes: a first-step processing device that at least performs sheath stripping for a multi-core shielded cable including a drain wire, one or more core wire, and a sheath covering the drain wire and the core wire; a detection device that detects a position of the drain wire for a circumferential direction of the multi-core shielded cable; a second-step processing device arranged side by side with the first-step processing device in a predetermined conveying direction, wherein the second-step processing device performs processing of a tip portion for at least one of the drain wire and the core wire; a positioning device; a relay device that receives the multi-core shielded cable from the first-step processing device and hands over the multi-core shielded cable to the second-step processing device; and a controller. The positioning device includes a first gripping device that grips the multi-core shielded cable so that a longitudinal direction thereof coincides with an orthogonal direction, which is orthogonal to the conveying direction, and a first rotating device that rotates the multi-core shielded cable gripped by the first gripping device around a first rotation shaft extending in the orthogonal direction. The controller controls the positioning device based on detection results from the detection device to drive at least the first rotating device and to thereby move the drain wire to a predetermined position around the first rotation shaft.

With the processing device for a multi-core shielded cable described above, the multi-core shielded cable is rotated so that the drain wire moves to a predetermined position. Based on the position of the drain wire after being moved, it is possible to distinguish the drain wire from the core wires. In the processing by the second-step processing device, such as stripping or crimping, the process conditions may be made different for the drain wire and for the core wires, and distinguishing between the drain wire and the core wires makes it easier to set the process conditions. Thus, it is possible to make more efficient the processing device for a multi-core shielded cable.

In one preferred embodiment of the processing device for a multi-core shielded cable according to the present invention, the first rotating device rotates the multi-core shielded cable so that the drain wire moves to a most upstream position or a most downstream position in the conveying direction among the drain wire and the core wire.

With the processing device for a multi-core shielded cable described above, since the drain wire is located at one end in the conveying direction in the second-step processing device, the processing of the drain wire is the first or last among the drain wire and the core wires. Therefore, where the processing for the drain wire and the processing for the core wires are different, the number of setup changes can be minimized.

In one preferred embodiment of the processing device for a multi-core shielded cable according to the present invention, the positioning device includes: a second gripping device provided in the first-step processing device that grips the multi-core shielded cable so that the longitudinal direction thereof coincides with the orthogonal direction; and a second rotating device that rotates the multi-core shielded cable gripped by the second gripping device around a second rotation shaft extending in the orthogonal direction. The detection device is configured to detect a position of the drain wire for the circumferential direction of the multi-core shielded cable while the multi-core shielded cable is gripped by the second gripping device. The controller controls the second rotating device based on detection by the detection device to rotate the multi-core shielded cable so that the drain wire faces toward the detection device, and then controls the first rotating device to move the drain wire to the predetermined position.

With the processing device for a multi-core shielded cable described above, the position of the drain wire for the circumferential direction of the multi-core shielded cable while being gripped by the second gripping device of the first-step processing device (hereinafter, also referred to simply as the position of the drain wire in the circumferential direction) is detected by the detection device, and the position of the drain wire in the circumferential direction is set to a position that faces toward the detection device. This determines the position of the drain wire in the circumferential direction, and therefore makes easier the processing of the drain wire and the core wires in the first-step processing device. In the first-step processing device, the position of the drain wire in the circumferential direction is set to a position that faces toward the detection device, thus enabling accurate positioning of the drain wire. Since the drain wire can be accurately positioned in the first-step processing device, positioning of the drain wire by the first gripping device and the first rotating device can also be done more accurately.

In one preferred embodiment of the processing device for a multi-core shielded cable, the first-step processing device includes a tube attaching device that attaches a heat-shrink tube to the drain wire, which has been moved so as to face toward the detection device.

With the processing device for a multi-core shielded cable described above, the position of the drain wire in the circumferential direction is determined by the action of the second rotating device, and it is therefore possible to easily attach the heat-shrink tube.

In one preferred embodiment of the processing device for a multi-core shielded cable according to the present invention, the first-step processing device includes a bending device that bends the multi-core shielded cable into a U-letter shape so that opposite end portions thereof are arranged side by side in the conveying direction. The bending device forms, in the multi-core shielded cable, an upstream-side portion extending in the orthogonal direction, a downstream-side portion extending in the orthogonal direction and located downstream of the upstream-side portion in the conveying direction, and a bent portion located between the upstream-side portion and the downstream-side portion. The detection device detects a position of the drain wire on an upstream side for the circumferential direction of the upstream-side portion, and a position of the drain wire on a downstream side for the circumferential direction of the downstream-side portion. The first gripping device is configured to grip the upstream-side portion of the multi-core shielded cable. The first rotating device is configured to rotate the upstream-side portion of the multi-core shielded cable. The positioning device includes: a downstream-side first gripping device provided on a downstream side in the conveying direction relative to the first gripping device to grip the downstream-side portion of the multi-core shielded cable; and a downstream-side first rotating device that rotates the downstream-side portion gripped by the downstream-side first gripping device around another first rotation shaft extending in the orthogonal direction. The controller controls the downstream-side first rotating device to move the drain wire on the downstream side to a predetermined position around the other first rotation shaft.

With the processing device for a multi-core shielded cable described above, the position of the drain wire can be determined at the opposite end portions of the multi-core shielded cable, which is bent in a U-letter shape, to successively process the opposite end portions. Therefore, the drain wire and the core wires can be distinguished from each other at both ends of the multi-core shielded cable.

In one preferred embodiment of the processing device for a multi-core shielded cable, the first rotation shaft is provided so as to be off a line extending along an axis of the upstream-side portion while the first gripping device is gripping the upstream-side portion of the multi-core shielded cable. The first rotating device is configured to rotate the first gripping device around the first rotation shaft, and rotates the first gripping device so that the line extending along the axis of the upstream-side portion moves downstream in the conveying direction.

With the processing device for a multi-core shielded cable described above, the opposite ends of the multi-core shielded cable move closer to each other in the conveying direction, and the distance between the opposite ends becomes narrower. Therefore, it is possible to shorten the length of the second-step processing device in the conveying direction.

In one preferred embodiment of the processing device for a multi-core shielded cable, the other first rotation shaft is provided so as to be off a line extending along an axis of the downstream-side portion while the downstream-side first gripping device is gripping the downstream-side portion of the multi-core shielded cable. The downstream-side first rotating device is configured to rotate the downstream-side first gripping device around the other first rotation shaft, and rotates the downstream-side first gripping device so that the line extending along the axis of the downstream-side portion moves upstream in the conveying direction.

Also with the processing device for a multi-core shielded cable described above, the opposite ends of the multi-core shielded cable move closer to each other in the conveying direction, and the distance between the opposite ends becomes narrower. Therefore, it is possible to shorten the length of the second-step processing device in the conveying direction.

A processing device for a multi-core shielded cable according to one preferred embodiment of the present invention further includes: an upstream-side third gripping device that is provided side by side with the first gripping device in the orthogonal direction, and grips the upstream-side portion of the multi-core shielded cable; a downstream-side third gripping device that is provided side by side with the downstream-side first gripping device in the orthogonal direction, and grips the downstream-side portion of the multi-core shielded cable; and a first moving device. The first moving device moves at least one of a pair of third gripping devices including the upstream-side third gripping device and the downstream-side third gripping device and a pair of first gripping devices including the first gripping device and the downstream-side first gripping device in the orthogonal direction to thereby move the pair of third gripping devices relative to the pair of first gripping devices in the orthogonal direction. The controller is configured to be capable of controlling the bending device so that a position of an upstream tip of the multi-core shielded cable and a position of a downstream tip of the multi-core shielded cable are shifted from each other by a predetermined distance in the orthogonal direction. Where the position of the upstream tip of the multi-core shielded cable and the position of the downstream tip of the multi-core shielded cable are shifted from each other by the predetermined distance, the controller is configured to: (1) control one of the first gripping device and the downstream-side first gripping device to grip the multi-core shielded cable, and control the other to release the multi-core shielded cable; (2) control the third gripping device, among the upstream-side third gripping device and the downstream-side third gripping device, corresponding to the first gripping device that has released the multi-core shielded cable to grip the multi-core shielded cable, and control the third gripping device corresponding to the first gripping device that is gripping the multi-core shielded cable to release the multi-core shielded cable; and (3) further control the first moving device to move the pair of third gripping devices relative to the pair of first gripping devices by the predetermined distance in the orthogonal direction so as to align a position of the upstream tip of the multi-core shielded cable in the orthogonal direction with a position of the downstream tip of the multi-core shielded cable in the orthogonal direction.

With the processing device for a multi-core shielded cable described above, even if the position of the upstream tip and the position of the downstream tip are shifted from each other when the multi-core shielded cable is bent, it is possible to align the position of the upstream tip with the position of the downstream tip. Therefore, it is easier to perform processing of the tip portion by the second-step processing device.

In one preferred embodiment of the processing device for a multi-core shielded cable according to the present invention, the first gripping device is provided in the relay device. The relay device uses the first gripping device to receive the multi-core shielded cable from the first-step processing device, and hand over the multi-core shielded cable to the second-step processing device.

With the processing device for a multi-core shielded cable described above, the positioning device and the relay device are partially shared. This allows the processing device for a multi-core shielded cable to be made more compact.

In one preferred embodiment of the processing device for a multi-core shielded cable according to the present invention, the relay device further includes a second moving device that moves the first gripping device between an upstream-side relay position, at which the multi-core shielded cable is relayed between the first-step processing device and the first gripping device, and a downstream-side relay position, at which the multi-core shielded cable is relayed between the first gripping device and the second-step processing device. The controller controls the second moving device to move the first gripping device from the upstream-side relay position to the downstream-side relay position, and controls the first rotating device to move the drain wire to the predetermined position while the first gripping device is moved from the upstream-side relay position to the downstream-side relay position.

With the processing device for a multi-core shielded cable described above, it is possible to position the drain wire in the circumferential direction while moving the multi-core shielded cable in the conveying direction. Thus, it is possible to shorten the cycle time for processing the multi-core shielded cable.

In one preferred embodiment of the processing device for a multi-core shielded cable according to the present invention, the controller controls the first rotating device based on detection by the detection device to rotate the multi-core shielded cable so that the drain wire faces toward the detection device, and then move the drain wire to the predetermined position.

With the processing device for a multi-core shielded cable described above, preliminary positioning of the drain wire is performed so that the position of the drain wire in the circumferential direction is set to a position that faces toward the detection device. This preliminary positioning of the drain wire may be performed accurately because the position of the drain wire in the circumferential direction is a position that faces toward the detection device. Since the preliminary positioning of the drain wire has been performed accurately, the positioning of the drain wire thereafter can also be performed more accurately.

### EFFECTS OF INVENTION

According to the present invention, it is possible to make more efficient a processing device for a multi-core shielded cable configured to distinguish between the drain wire and the core wires before processing the tip portion.

### BRIEF DESCRIPTION OF DRAWINGS

[FIG. **1**] A schematic cross-sectional view of a multi-core shielded cable.
[FIG. **2**] A schematic plan view of a multi-core shielded cable processing device according to one embodiment.
[FIG. **3**] A schematic plan view of a core wire separation device.
[FIG. **4**] A schematic rear view of the core wire separation device.
[FIG. **5**] A perspective view of a fixed clamp forward of the core wire separation device and a detection device.
[FIG. **6**] A perspective view of a relay device.
[FIG. **7**] A rear view of the relay device.
[FIG. **8**] A rear view of the relay device after an upstream-side clamp and a downstream-side clamp have been rotated.
[FIG. **9**] A perspective view of the relay device after the upstream-side clamp and the downstream-side clamp have been rotated and moved laterally.
[FIG. **10**] A block diagram of the multi-core shielded cable processing device.
[FIG. **11A**] The first half of a flow chart showing the processing of the multi-core shielded cable.
[FIG. **11B**] The second half of the flow chart showing the processing of the multi-core shielded cable.
[FIG. **12**] A perspective view showing the relay device gripping the multi-core shielded cable where the tip positions of the opposite end portions are different from each other.
[FIG. **13**] A perspective view showing the relay device immediately after starting the work of aligning the tip positions of the opposite end portions.
[FIG. **14**] A perspective view showing the relay device after finishing aligning the tip positions of the opposite end portions.

### DESCRIPTION OF EMBODIMENTS

### [Configuration of processing device]

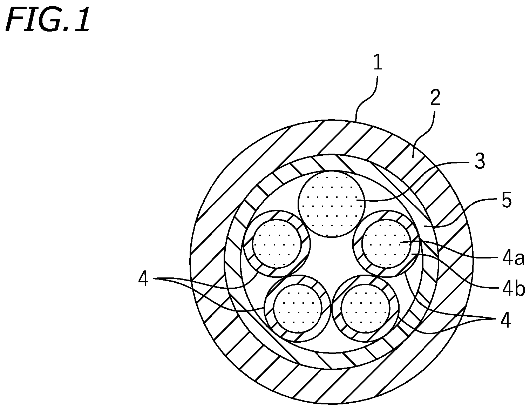

An embodiment of the present invention will now be described with reference to the drawings. First, a multi-core shielded cable **1,** which is the subject of wire processing described here, will be described with reference to FIG. **1.** FIG. **1** is a schematic cross-sectional view of the multi-core shielded cable **1** according to one example. As shown in FIG. **1****,** the multi-core shielded cable **1** includes a sheath **2,** a drain wire **3,** a plurality of core wires **4,** and a shield **5.** The sheath **2** is made of an insulator, and covers the drain wire **3,** the plurality of core wires **4,** and the shield **5.** The plurality of core wires **4** are used as signal wires to transmit electrical signals, for example. The plurality of core wires **4** each include a core **4a** and a cover **4b** that is an insulator covering the core **4a.** The shield **5** is a conductor that shields the core wires **4** from external noise. The shield **5** covers the outside of the plurality of core wires **4.** The drain wire **3** is electrically connected to the shield **5.** The drain wire **3** is grounded, thereby grounding the shield **5.** The drain wire **3** includes a plurality of thin conductor strands, and is not sheathed by an insulator. Although not shown in the figures, the drain wire **3** and the plurality of core wires **4** are twisted together inside the shield **5.** There is no particular limitation on the number of core wires **4.** The number of core wires **4** may be one or more. In the following, when the drain wire **3** and the plurality of core wires **4** are not particularly distinguished from each other, they may be referred to collectively as "electric wires".

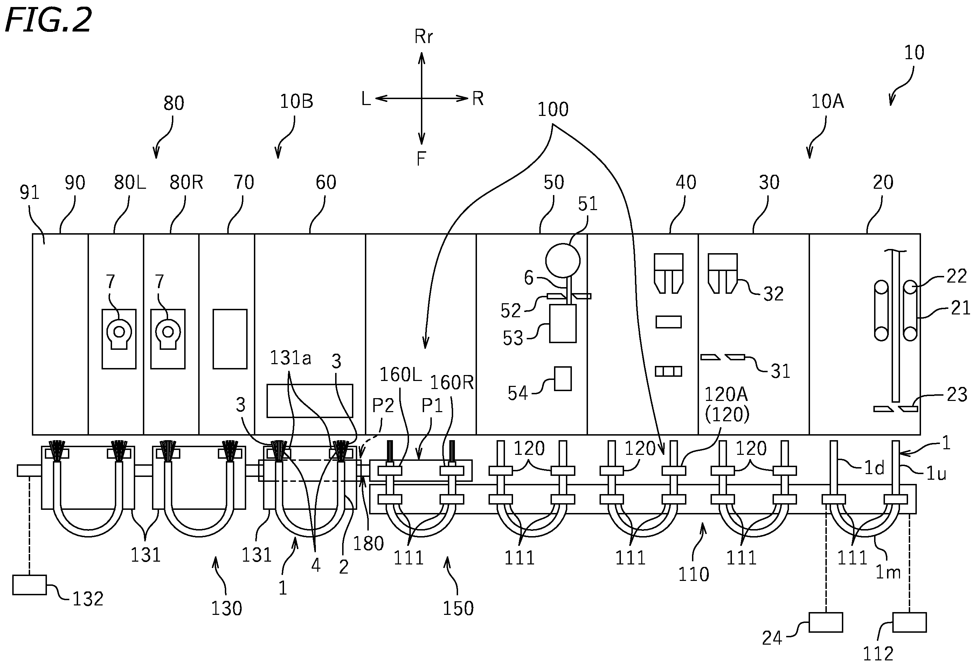

FIG. **2** is a schematic plan view of a processing device for the multi-core shielded cable **1** according to one embodiment (hereinafter simply referred to as the "processing device" **10).** The processing device **10** is a device for insulating the drain wire **3** and crimps a terminal 7 to the tip thereof, and also crimps a terminal **7** to the tip of each of the plurality of core wires **4.** The insulating process for the drain wire **3** is a process of wrapping the drain wire **3** with a heat-shrink tube **6,** and heat shrinking the heat-shrink tube **6.** The processing device **10** may be configured to further perform a process of attaching waterproofing rubber plugs to the drain wire **3** and the plurality of core wires **4.**

Hereinafter, the downward side in FIG. **2** of where the conveying path of the multi-core shielded cable **1** is formed will be referred to as the forward side of the processing device **10.** Leftward and rightward of the processing device **10** will be referred to as leftward and rightward when viewed from the forward side of the processing device **10** toward the rearward side. In the figures, front, rear, left, right, up, and down will be denoted by reference signs F, Rr, L, R, U, and D, respectively. Note however that these directions are merely defined for the sake of explanation and do not in any way limit how the processing device **10** is installed, etc.

As shown in FIG. **2****,** the processing device **10** according to a present embodiment includes a first-step processing device **10A** that performs at least stripping the sheath **2** of the multi-core shielded cable **1,** and a second-step processing device **10B** that performs processing of the tip portion of at least one of the drain wire **3** and the plurality of core wires **4.** Some of the drain wire **3** and the plurality of core wires **4** may not require processing of the tip portion by the second-step processing device **10B.** The second-step processing device **10B** is arranged side by side with the first-step processing device **10A** in the conveying direction of the multi-core shielded cable **1** (here, the left-right direction). Specifically, the second-step processing device **10B** is arranged downstream (here, leftward) of the first-step processing device **10A** in the conveying direction of the multi-core shielded cable **1.** In the present embodiment, the first-step processing device **10A** is configured to grip the portion of the multi-core shielded cable **1** covered by the sheath **2,** and the second-step processing device **10B** is configured to individually grip the drain wire **3** and the plurality of core wires **4.** In the present embodiment, the first-step processing device **10A** and the second-step processing device **10B** are separated because they use different gripping methods. Therefore, the processing device **10** according to the present embodiment further includes a relay device **150** that receives the multi-core shielded cable **1** from the first-step processing device **10A** and hands over the multi-core shielded cable **1** to the second-step processing device **10B.**

In the present embodiment, the first-step processing device **10A** includes a cut-and-shape device **20** that cuts the multi-core shielded cable **1** to a predetermined length and bends it into a U-letter shape, a semi-stripping device **30** that performs a semi-stripping step of slitting the sheath **2** and pulling out the sheath **2** halfway, a core wire separation device **40** that completely pulls out the sheath **2** on the tip side and separates the drain wire **3** and the plurality of core wires **4,** and a tube attaching device **50** that attaches the heat-shrink tube **6** to the drain wire **3.** Note however that the devices included in the first-step processing device **10A** and the steps carried out by the first-step processing device **10A** are merely one preferred example, and there is no particular limitation thereto. These devices are arranged side by side in this order towards the downstream side in the conveying direction of the multi-core shielded cable **1.**

As shown in FIG. **2****,** the first-step processing device **10A** includes a conveying device **110** that conveys the multi-core shielded cable **1** from the cut-and-shape device **20** to the tube attaching device **50.** The conveying device **110** includes a plurality of conveying clamps **111** arranged side by side in the conveying direction of the multi-core shielded cable **1,** a driving section **112** that moves the plurality of conveying clamps **111** in the conveying direction, and a plurality of fixed clamps **120** arranged side by side in the front-rear direction (a direction that is orthogonal to the conveying direction, hereinafter referred to also as the orthogonal direction) relative to the devices of the first-step processing device **10A.** The plurality of conveying clamps **111** and the plurality of fixed clamps **120** grip the multi-core shielded cable **1** (specifically, the straight portion on the upstream side or the downstream side) so that the longitudinal direction of the multi-core shielded cable **1** (here, the longitudinal direction of the opposing straight portions bent in a U-letter shape) coincides with the orthogonal direction (the front-rear direction). The conveying clamps **111** convey the multi-core shielded cable **1** between the plurality of fixed clamps **120.** Thus, a plurality of multi-core shielded cables **1** are successively conveyed downstream in the conveying direction. Note that the number of conveying clamps **111** may be one, rather than plural.

The second-step processing device **10B** includes an alignment device **60** that individually grips the drain wire **3** and the plurality of core wires **4** to align them at the same pitch, a stripping device **70** that strips the heat-shrink tube **6** covering the drain wire **3** and the cover **4b** of the plurality of core wires **4,** a crimping device **80** that crimps the terminals **7** to the drain wire **3** and the plurality of core wires **4,** and an ejecting device **90** that ejects the multi-core shielded cable **1.**

As shown in FIG. **2****,** the second-step processing device **10B** includes a shuttle conveying device **130** that conveys the multi-core shielded cable **1** from the alignment device **60** to the ejecting device **90.** The shuttle conveying device **130** includes a plurality of shuttles **131** each including gripping portions **131a** for individually gripping the drain wire **3** and the plurality of core wires **4,** and a driving section **132** that circulates the plurality of shuttles **131.** Note that the number of shuttles **131** may be one rather than plural. The shuttles **131** may be reciprocated rather than circulated.

The configuration of the devices of the first-step processing device **10A,** the devices of the second-step processing device **10B,** and the relay device **150** will be described below. The cut-and-shape device **20** of the first-step processing device **10A** cuts the multi-core shielded cable **1** to a predetermined length and shapes it into a U-letter shape. The cut-and-shape device **20** includes a feeding device **21** that conveys the multi-core shielded cable **1,** the length measuring device **22** that measures the length of the multi-core shielded cable **1,** a cutting device **23** that cuts the multi-core shielded cable **1** to a predetermined length, and a bending device **24** that bends the multi-core shielded cable **1,** which has been cut, into a U-letter shape. The bending device **24** bends the multi-core shielded cable **1** into a U-letter shape so that the opposite end portions are arranged side by side in the conveying direction. The bending device **24** thus forms, in the multi-core shielded cable **1,** an upstream-side portion **1u** extending in the orthogonal direction, a downstream-side portion **1d** extending in the orthogonal direction and located downstream of the upstream-side portion **1u** in the conveying direction, and a bent portion **1m** located between the upstream-side portion **1u** and the downstream-side portion **1d.** The tip portion (the open end) of the upstream-side portion **1u** will be referred to also as the upstream-side end portion of the multi-core shielded cable **1,** and the tip portion of the downstream-side portion **1d** will be referred to also as the downstream-side end portion of the multi-core shielded cable **1.** The sheath **2** is stripped from the upstream-side end portion and the downstream-side end portion of the multi-core shielded cable **1,** and the terminals **7** are crimped to the drain wire **3** and the core wires **4,** which are exposed by the sheath stripping.

Here, the bending device **24** includes an arc-shaped rail (not shown) for moving the second most upstream conveying clamp **111** in the conveying direction to a position forward of the most upstream conveying clamp **111** in the conveying direction, and a driving section (denoted in FIG. **2** by reference sign 24 of the bending device) for moving the second most upstream conveying clamp **111** in the conveying direction along the rail. With the second most upstream conveying clamp **111** being arranged forward of the most upstream conveying clamp **111,** the multi-core shielded cable **1** before being bent is gripped, and then the second conveying clamp **111** is moved toward the downstream side in the conveying direction of the most upstream conveying clamp **111,** thereby moving the multi-core shielded cable **1** into a U-letter shape. After the multi-core shielded cable **1** is shaped in a U-letter shape, the most upstream conveying clamp **111** grips the upstream-side portion **1u** of the multi-core shielded cable **1.** The second most upstream conveying clamp **111** grips the downstream-side portion **1d** of the multi-core shielded cable **1.**

The semi-stripping device **30** includes a slitting device **31** that slits the sheath **2,** and a pull-out device **32** for pulling out the sheath **2** halfway. In the semi-stripping step, the pull-out device **32** moves the distal-side sheath **2** toward the tip side of the multi-core shielded cable **1** while rotating the sheath **2** in the circumference direction relative to the proximal-side the sheath **2.** The pull-out device **32** thus untwists the drain wire **3** and the plurality of core wires **4.**

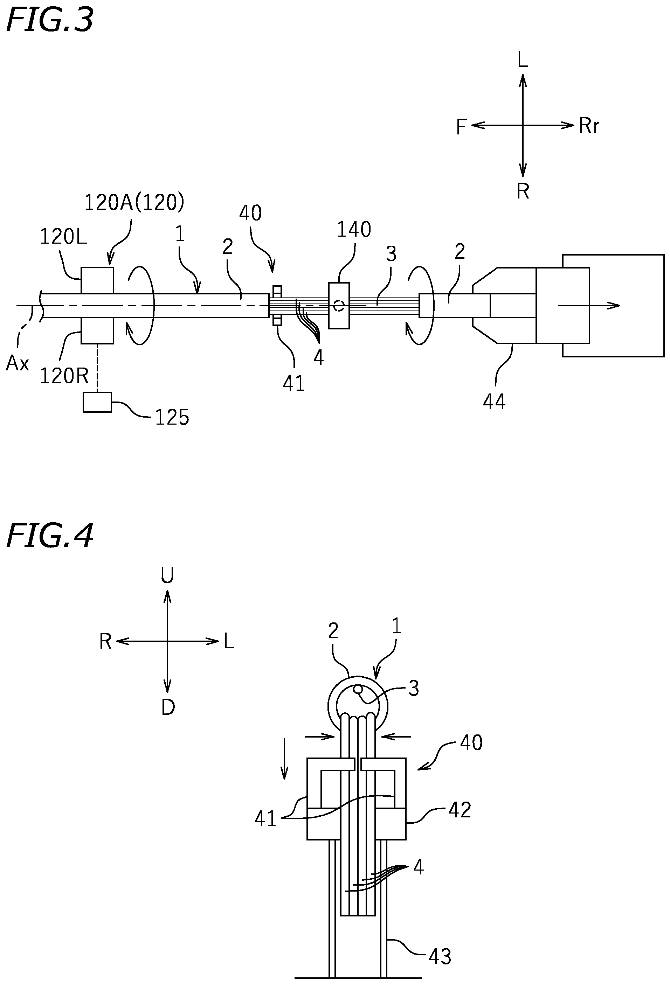

The core wire separation device **40** separates the plurality of core wires **4** from the drain wire **3** by bending the plurality of core wires **4.** FIG. **3** is a schematic plan view of the core wire separation device **40.** FIG. **4** is a schematic rear view of the core wire separation device **40.** FIG. **4** is a view showing a state where the core wires **4** are separated. As shown in FIG. **3****,** a rotating device **125** that rotates the multi-core shielded cable **1** around the axis is connected to the fixed clamp **120** arranged forward of the core wire separation device **40.** The rotating device **125** rotates the multi-core shielded cable **1** so that the drain wire **3** is positioned at the 0 o'clock position (see FIG. **4**). Provided upward of the fixed clamp **120** is a detection device **140** that detects the position of the drain wire **3** in the circumferential direction with the multi-core shielded cable **1** being gripped by the fixed clamp **120.** The rotation of the rotating device **125** is controlled based on the detection by the detection device **140.** The core wire separation device **40** separates the drain wire **3** and the core wires **4** by leaving the drain wire **3** positioned at the 0 o'clock direction and bending downward the core wires **4** located at other positions.

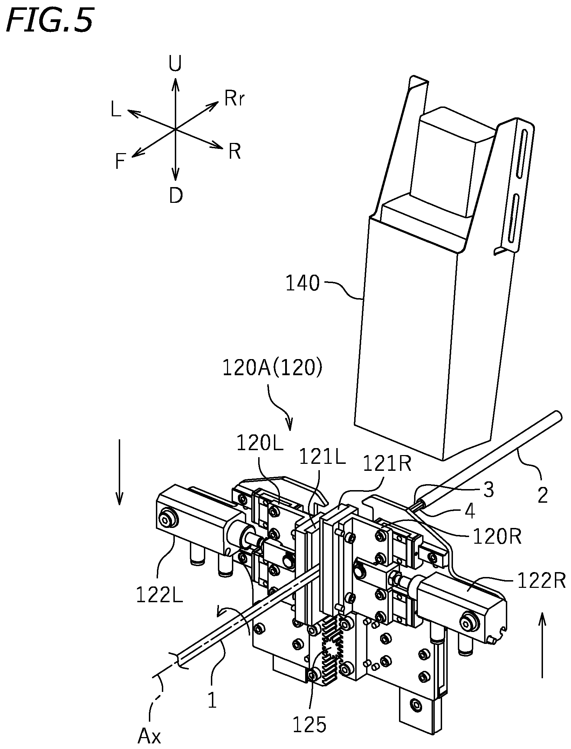

FIG. **5** is a perspective view of the fixed clamp **120** forward of the core wire separation device **40** and the detection device **140.** Hereinafter, a fixed clamp **120** that is forward of the core wire separation device **40** is distinguished from other fixed clamps **120** will be denoted by using reference sign 120A. When using reference sign 120A, the fixed clamp **120A** forward of the core wire separation device **40** may be referred to simply as the fixed clamp **120A.** As with the other fixed clamps **120,** the fixed clamp **120A** grips the multi-core shielded cable **1** so that the longitudinal direction of the multi-core shielded cable **1** coincides with the orthogonal direction. As shown in FIG. **5****,** the fixed clamp **120A** includes a left clamp **120L** that contacts, from the left side, the multi-core shielded cable **1,** which has been moved to a position forward of the core wire separation device **40,** and a right clamp **120R** that contacts, from the right side, the multi-core shielded cable **1.** The left clamp **120L** and the right clamp **120R** include clamping plates **121L** and **121R,** respectively, that are configured to be movable in the conveying direction to contact or separate from the multi-core shielded cable **1.** The left clamp **120L** and the right clamp **120R** also include driving sections **122L** and **122R** that move the clamping plates **121L** and **121R** in the conveying direction and cause the clamping plates **121L** and **121R** to grip or release the multi-core shielded cable **1.** The driving sections **122L** and **122R** are herein air cylinders. Note however that there is no particular limitation on the type of the driving sections **122L** and **122R.**

The rotating device **125** rotates the multi-core shielded cable **1** gripped by the fixed clamp **120A** around a predetermined rotation axis **Ax** extending in the orthogonal direction. The rotation axis **Ax** herein coincides with the axis of the multi-core shielded cable **1** when being gripped by the fixed clamp **120A.** The rotating device **125** moves the left clamp **120L** downward or upward, and the right clamp **120R** upward or downward. The rotating device **125** moves the left clamp **120L** and the right clamp **120R** in directions such that the left clamp **120L** and the right clamp **120R** shift from each other. Thus, the rotating device **125** rotates the multi-core shielded cable **1** around the rotation axis **Ax.** FIG. **5** shows, by arrows, a case where the left clamp **120L** is moved downward and the right clamp **120R** is moved upward. The rotation direction of the multi-core shielded cable **1** is determined in accordance with the position of the drain wire **3** in the circumferential direction detected by the detection device **140.**

The detection device **140** is a device that detects the position in the circumferential direction of the drain wire **3,** and is a camera, for example. Here, the detection device **140** successively detects the position of the upstream-side drain wire **3** for the circumferential direction of the upstream-side portion **1u** of the multi-core shielded cable **1,** and the position of the downstream-side drain wire **3** for the circumferential direction of the downstream-side portion **1d.** The detection device **140** identifies the drain wire **3** using the difference in brightness with respect to the core wires **4** from a captured image of the multi-core shielded cable **1,** for example. Note however that the method of detecting the drain wire **3** using the detection device **140** is not limited to the method of capturing an image of the drain wire **3.** The position of the drain wire **3** may be detected, for example, by a probe that passes an electric current through the drain wire **3.** Herein, the detection device **140** is arranged at the 0 o'clock position around the rotation axis **Ax** as viewed in the front-rear direction (as viewed in the direction of the axis of the rotation axis **Ax**). As will be explained in the description of a controller **200,** the controller **200** rotates the multi-core shielded cable **1** so that the drain wire **3** faces toward the detection device **140** based on the detection by the detection device **140.** As a result, the drain wire **3** is moved to the 0 o'clock position. By positioning the drain wire **3** at a position in the circumferential direction such as to face toward the detection device **140,** it is possible to accurately control the position of the drain wire **3.** Note that the position of the detection device **140** around the rotation axis **Ax** is not limited to the 0 o'clock position, and may be any of various positions in the circumferential direction.

As shown in FIG. **3** and FIG. **4****,** the core wire separation device **40** includes a pair of left and right hooks **41,** a hook opening/closing device **42,** and a hook moving device **43.** The pair of hooks **41** opens and closes by moving in the left-right direction so as to move away from or toward each other. The hook opening/closing device **42** is a driving section that opens and closes the pair of hooks **41.** The hook moving device **43** is a driving section that moves the pair of hooks **41** in the up-down direction. When the pair of hooks **41** is closed, the pair of hooks **41** encloses the multi-core shielded cable **1,** except for the 0 o'clock direction, as viewed in the front-rear direction. When the pair of hooks **41** is moved downward by the hook moving device **43** in this state, the plurality of core wires **4** are hooked by the pair of hooks **41** and bent downward. The drain wire **3** is left remaining not hooked by the pair of hooks **41.** Thus, the drain wire **3** is separated from the plurality of core wires **4.** As shown in FIG. **3****,** the core wire separation device **40** also includes a pull-out device **44** that completely pulls out the semi-stripped sheath **2** from the multi-core shielded cable **1.**

The tube attaching device **50** attaches the insulator heat-shrink tube **6** to the drain wire **3,** thereby performing the insulation process for the drain wire **3.** The tube attaching device **50** attaches the heat-shrink tube **6** to the drain wire **3,** which has been moved so as to face toward the detection device **140** (herein, the 0 o'clock position). With the position of the drain wire **3** in the circumferential direction determined, it is easy to attach the heat-shrink tube **6** to the drain wire **3.** The tube attaching device **50** includes a tube reel **51** around which the uncut heat-shrink tube **6** is wound, a cutting device **52** that cuts the heat-shrink tube **6** to a predetermined length, an insertion device **53** that inserts the drain wire **3** into the heat-shrink tube **6,** and a heating device **54** that heats the heat-shrink tube **6** with the drain wire **3** inserted therethrough. Since the drain wire **3** has been moved to the 0 o'clock position (in front of the insertion device **53**), the insertion device **53** can place the heat-shrink tube **6** over the drain wire **3** by holding and moving the heat-shrink tube **6** forward. Note however that the method of insulating the drain wire **3** is not limited to the method of placing the heat-shrink tube **6** over the drain wire **3.** The drain wire **3** may be insulated by wrapping the drain wire **3** with insulating tape, for example.

The relay device **150** grips the multi-core shielded cable **1** as the multi-core shielded cable **1,** after completion of the insulation process of the drain wire **3,** is moved by the conveying clamp **111** on the downstream side in the conveying direction relative to the tube attaching device **50.** As the relay device **150** grips the multi-core shielded cable **1,** the conveying clamp **111** releases the multi-core shielded cable **1** and returns to the upstream side in the conveying direction. Hereinafter, the position of clamps **160R** and **160L** (described below) of the relay device **150** when the multi-core shielded cable **1** is relayed to and from the first-step processing device **10A** is referred to also as the upstream-side relay position **P1.** The relay device **150** hands over the multi-core shielded cable **1** to the second-step processing device **10B.** Hereinafter, the position of the clamps **160R** and **160L** of the relay device **150** when the multi-core shielded cable **1** is relayed to and from the second-step processing device **10B** is referred to also as the downstream-side relay position **P2.** The relay device **150** is configured to move the clamps **160R** and **160L** between the upstream-side relay position **P1** and the downstream-side relay position **P2.** The details of the relay device **150** will be described later.

The alignment device **60** is arranged at the most upstream side of the second-step processing device **10B,** and individually grips the drain wire **3** and the plurality of core wires **4** to align them at the same pitch. The alignment device **60** is configured to push the drain wire **3** and core wires **4** into the gripping portions **131a** of the shuttle **131,** which is configured to individually grip the drain wire **3** and the core wires **4.** The gripping portion **131a** has a plurality of grooves that can each grip an electric wire and are arranged side by side in the conveying direction. Thus, the alignment device **60** aligns the drain wire **3** and the plurality of core wires **4** so as to be arranged side by side in the conveying direction. As will be explained in more detail in the description of the relay device **150,** when the drain wire **3** and the plurality of core wires **4** of the multi-core shielded cable **1** are relayed from the relay device **150** to the alignment device **60,** the drain wire **3** and the plurality of core wires **4** are arranged side by side in the conveying direction. The alignment device **60** is configured to receive the drain wire **3** and the plurality of core wires **4** with a comb-shaped member having grooves arranged side by side in the conveying direction and push the drain wire **3** and the plurality of core wires **4** into the gripping members **131a.**

The stripping device **70** is provided downstream relative to the alignment device **60** in the conveying direction, and strips the tip portions of the heat-shrink tube **6** covering the drain wire **3** and the covers **4b** of the plurality of core wires **4.** The stripping by the stripping device **70** is performed successively for the drain wire **3** and the plurality of core wires **4.** In the stripping step, the stripping length and the cutting depth may differ between the drain wire **3** and the core wires **4.**

The crimping device **80** is provided downstream relative to the stripping device **70** in the conveying direction, and crimps terminals **7** to the drain wire **3** and the plurality of core wires **4.** The crimping of the terminals **7** by the crimping device **80** is performed successively for the drain wires **3** and the plurality of core wires **4.** Herein, the crimping device **80** includes a right crimping device **80R** that crimps terminals **7** to the downstream-side drain wire **3** and the core wires **4,** and a left crimping device **80L** that crimps terminals **7** to the upstream-side drain wire **3** and the core wires **4.** The ejecting device **90** includes a tray **91** into which the multi-core shielded cable **1** is dropped after the terminals **7** are crimped.

### [Configuration of relay device]

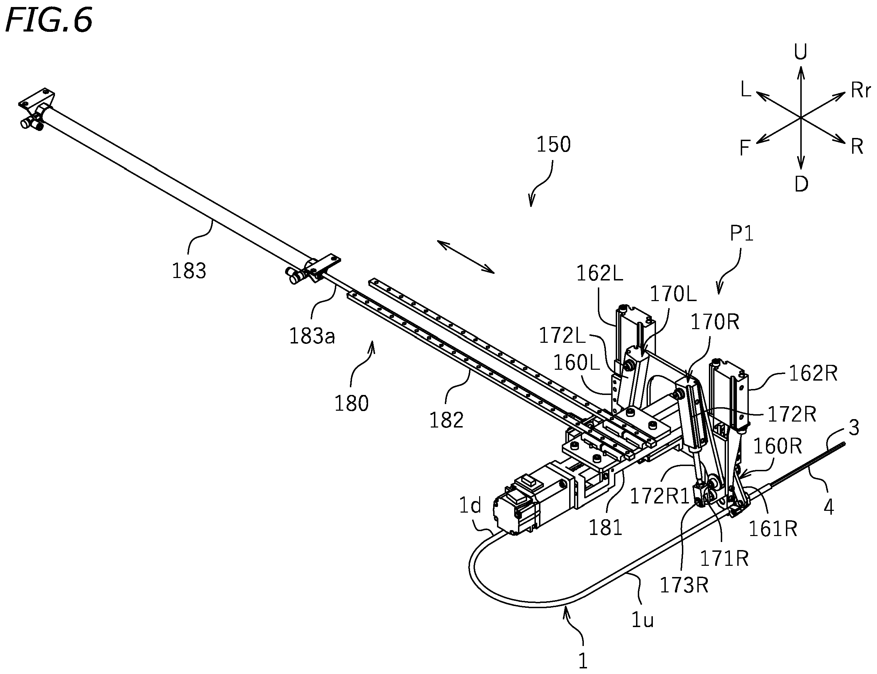

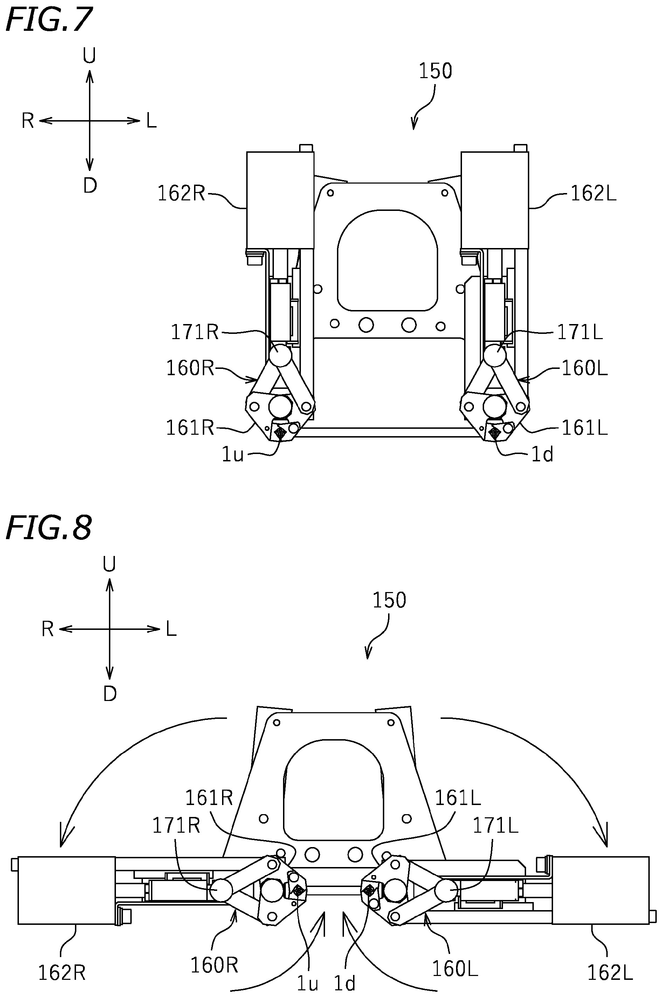

The configuration of the relay device **150** will be described below. FIG. **6** is a perspective view of the relay device **150.** FIG. **7** is a rear view of the relay device **150.** As shown in FIG. **6** and FIG. **7****,** the relay device **150** includes an upstream-side clamp **160R,** an upstream-side rotating device **170R,** a downstream-side clamp **160L,** a downstream-side rotating device **170L,** and a slide device **180.**

The upstream-side clamp **160R** is arranged between the first-step processing device **10A** and the second-step processing device **10B,** and grips the multi-core shielded cable **1** so that its longitudinal direction coincides with the orthogonal direction. Note that the upstream-side clamp **160R** being "arranged between the first-step processing device **10A** and the second-step processing device **10B"** includes cases where the position of the upstream-side clamp **160R** in the conveying direction overlaps with the position of the first-step processing device **10A** or the second-step processing device **10B** in the conveying direction when the multi-core cable **1** is relayed. This similarly applies also to the downstream-side clamp **160L.** The upstream-side clamp **160R** grips the upstream-side portion **1u** of the multi-core shielded cable **1.** The upstream-side rotating device **170R** rotates the multi-core shielded cable **1** gripped by the upstream-side clamp **160R** around an upstream-side rotation shaft **171R,** which extends in the orthogonal direction. Herein, the upstream-side rotating device **170R** is configured to rotate the upstream-side clamp **160R** around the upstream-side rotation shaft **171R.** By rotating the upstream-side clamp **160R** around the upstream-side rotation shaft **171R,** the upstream-side rotating device **170R** rotates the upstream-side portion **1u** of the multi-core shielded cable **1** around the upstream-side rotation shaft **171R.**

As shown in FIG. **6****,** the upstream-side clamp **160R** includes a pair of left and right gripping claws **161R,** and a driving section **162R** that moves the pair of gripping claws **161R** toward or away from each other to grip or release the upstream-side portion **1u** of the multi-core shielded cable **1.** The driving section **162R** is herein an air cylinder. Note however that there is no particular limitation on the configuration of the driving section **162R.** The driving section **162R** may include an electric motor, for example. FIG. **6** shows the relay device **150** at the time of receiving the multi-core shielded cable **1** from the first-step processing device **10A** (also referred to as "before rotation"), at which time the gripping claws **161R** are located at the lower end portion of the upstream-side clamp **160R.**

As shown in FIG. **6****,** the upstream-side rotating device **170R** includes an upstream-side rotation shaft **171R** that rotatably supports the upstream-side clamp **160R,** an air cylinder **172R** having a telescopic rod **172R1,** and a connecting portion **173R** that swingably connects together the rod **172R1** and the upstream-side clamp **160R.** The upstream-side rotation shaft **171R** is provided so as to be off the line extending along the axis of the upstream-side portion **1u** of the multi-core shielded cable **1** while the upstream-side clamp **160R** is gripping the upstream-side portion **1u.** Therefore, as the rod **172R1** extends and collapses, the multi-core shielded cable **1** revolves around the upstream-side rotation shaft **171R** rather than rotating around the axis in place. As shown in FIG. **6****,** the rod **172R1** is extended in the state before the upstream-side clamp **160R** is rotated.

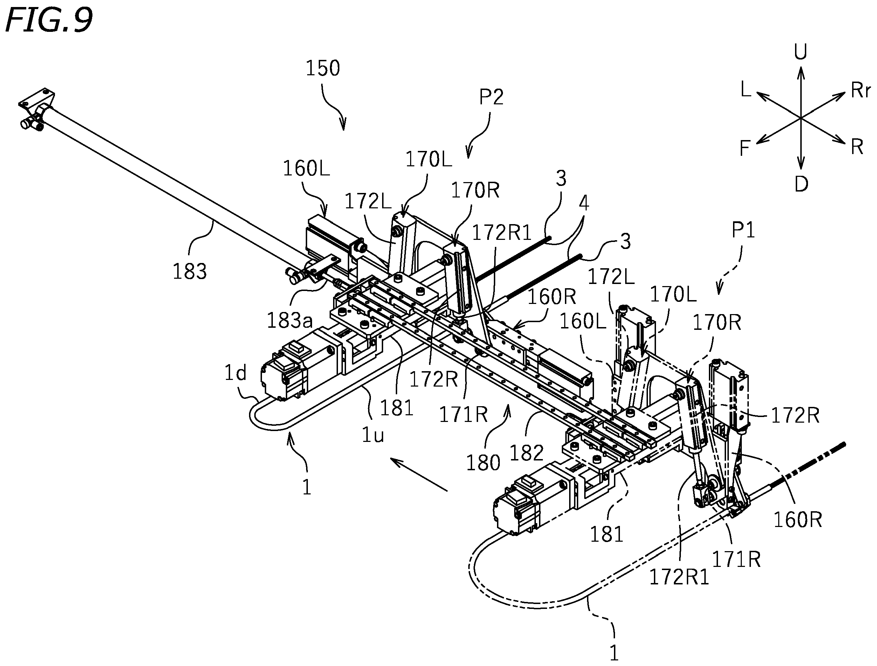

FIG. **8** is a rear view of the relay device **150** after the upstream-side clamp **160R** and the downstream-side clamp **160L** are rotated. When the rod **172R1** collapses (see FIG. **9**), the upstream-side clamp **160R** rotates counterclockwise as viewed from the rear side (clockwise as viewed from the front side) as shown in FIG. **8****.** The upstream-side portion **1u** of the multi-core shielded cable **1** gripped by the upstream-side clamp **160R** thereby moves downstream in the conveying direction. The upstream-side rotating device **170R** rotates the upstream-side clamp **160R** so that the line extending along the axis of the upstream-side portion **1u** moves downstream in the conveying direction.

The upstream-side rotating device **170R** rotates the multi-core shielded cable **1** to thereby move the drain wire **3** to a predetermined position around the upstream-side rotation shaft **171R.** Here, the upstream-side rotating device **170R** rotates the upstream-side clamp **160R** by 90 degrees or approximately 90 degrees to move the drain wire **3** at the upstream-side portion **1u** to the most upstream position in the conveying direction among the drain wire **3** and the plurality of core wires **4.** In the present embodiment, the upstream-side rotating device **170R** rotates the upstream-side portion **1u** of the multi-core shielded cable **1** by an angle equal to the angle (here, 90 degrees) between the position of the detection device **140** around the rotation axis **Ax** (here, the 0 o'clock position, see FIG. **5**) and the conveying direction. The upstream-side rotating device **170R** thereby moves the drain wire **3** to the most upstream position in the conveying direction. Note that the relay of the multi-core cable **1** from the first-step processing device **10A** to the relay device **150** is performed in such a way that the drain wire **3** is maintained at the 0 o'clock position in the upstream-side portion **1u** and in the downstream-side portion **1d.**

The downstream-side clamp **160L** and the downstream-side rotating device **170L** are configured to be in left-right symmetry with the upstream-side clamp **160R** and upstream-side rotating device **170R,** respectively. The downstream-side clamp **160L** is provided on the downstream side in the conveying direction relative to the upstream-side clamp **160R,** and grips the downstream-side portion **1d** of the multi-core shielded cable **1.** The downstream-side rotating device **170L** rotates the downstream-side portion **1d** held by the downstream-side clamp **160L** around a downstream-side rotation shaft **171L,** which extends in the orthogonal direction. As shown in FIG. **7****,** the downstream-side rotation shaft **171L** is also provided so as to be off the line extending along the axis of the downstream-side portion **1d** of the multi-core shielded cable **1** while the downstream-side clamp **160L** is gripping the downstream-side portion **1d.**

The downstream-side clamping device **160L** includes a pair of left and right gripping claws **161L,** and a driving section **162L** that moves the pair of gripping claws **161L** toward or away from each other to grip or release the downstream-side portion **1d** of the multi-core shielded cable **1.** The downstream-side rotating device **170L** includes the downstream-side rotation shaft **171L,** an air cylinder **172L** (see FIG. **6**) having a telescopic rod, and a connecting portion that swingably connects together the rod and the downstream-side clamp **160L.** In the present embodiment, as the rod of the air cylinder **172L** collapses, the downstream-side clamp **160L** rotates clockwise as viewed from the rear side (counterclockwise as viewed from the front side) as shown in FIG. 7. The downstream-side portion **1d** of the multi-core shielded cable **1** gripped by the downstream-side clamp **160L** thereby moves upstream in the conveying direction. When the upstream-side air cylinder **172R** and the downstream-side air cylinder **172L** are both collapsed, the upstream-side portion **1u** and the downstream-side portion **1d** of the multi-core shielded cable **1** move closer to each other.

The downstream-side rotating device **170L** rotates the multi-core shielded cable **1** to thereby move the drain wire **3** to a predetermined position around the downstream-side rotation shaft **171L.** Here, the downstream-side rotating device **170L** rotates the downstream-side clamp **160L** by 90 degrees or approximately 90 degrees to move the drain wire **3** at the downstream-side portion **1d** to the most downstream position in the conveying direction among the drain wire **3** and the plurality of core wires **4.** Similar to the upstream-side rotating device **170R,** the downstream-side rotating device **170L** rotates the downstream-side portion **1d** of the multi-core shielded cable **1** by an angle equal to the angle (here, 90 degrees) between the position of the detection device **140** around the rotation axis **Ax** (here, the 0 o'clock position) and the conveying direction.

The upstream-side clamp **160R,** the upstream-side rotating device **170R,** the downstream-side clamp **160L** and the downstream-side rotating device **170L,** and the rotating device **125** of the first-step processing device **10A** together form a positioning device **100** that moves the drain wire **3** to a predetermined position in the circumferential direction based on the detection results from the detection device **140** (see FIG. **2**). In the present embodiment, the positioning device **100** includes a portion provided in the first-step processing device **10A,** and a portion arranged between the first-step processing device **10A** and the second-step processing device **10B.** Note however that as shown in other embodiments to be described below, the positioning device **100** does not need to be arranged in a distributed manner.

As shown in FIG. **2****,** the slide device **180** moves the clamps **160R** and **160L** between the upstream-side relay position **P1,** where the multi-core shielded cable **1** is relayed between the first-step processing device **10A** and the clamps **160R** and **160L,** and the downstream-side relay position **P2,** where the multi-core shielded cable **1** is relayed between the clamps **160R** and **160L** and the second-step processing device **10B.** As shown in FIG. **6****,** the slide device **180** includes a moving member **181** that supports the upstream-side rotating device **170R,** the downstream-side rotating device **170L,** the upstream-side clamp **160R,** and the downstream-side clamp **160L.** The upstream-side clamp **160R** and the downstream-side clamp **160L** are supported by a moving member **181** via the upstream-side rotating device **170R** and the downstream-side rotating device **170L,** respectively. The slide device **180** further includes a guide rail **182,** which extends in the conveying direction and with which the moving member **181** is slidably engaged, and an air cylinder **183,** which moves the moving member **181** along the guide rail **182.** As shown in FIG. **6****,** the air cylinder **183** is arranged on the downstream side of the guide rail **182,** and the air cylinder **183** moves the moving member **181** to the downstream side in the conveying direction by collapsing a rod **183a.** The air cylinder **183** moves the moving member **181** to the upstream side in the upstream direction by extending the rod **183a.** Note however that the mechanism for moving the clamps **160R** and **160L** between the upstream-side relay position **P1** and the downstream-side relay position **P2** is not limited to the one described above. For example, the slide device **180** may move the moving member **181** in the conveying direction using a ball screw and a motor that rotates the ball screw.

The relay device **150** is configured to rotate the multi-core shielded cable **1** by controlling the upstream-side rotating device **170R** and the downstream-side rotating device **170L** while the clamps **160R** and **160L** are being moved from the upstream-side relay position **P1** to the downstream-side relay position **P2.** The relay time of the multi-core shielded cable **1** is reduced by performing the movement and the rotation of the clamps **160R** and **160L** in parallel. FIG. **9** is a perspective view of the relay device **150** after the upstream-side clamp **160R** and the downstream-side clamp **160L** have been rotated and moved laterally. At the downstream-side relay position **P2** indicated by a solid line in FIG. **9****,** the relay device **150** hands over the multi-core shielded cable **1** to the second-step processing device **10B.** At this time, the drain wire **3** at the upstream-side portion **1u** of the multi-core shielded cable **1** is located at the most upstream position, and the drain wire **3** at the downstream-side portion **1d** is located at the most downstream position. The two-dot-chain line in FIG. **9** shows the moving member **181** and its load while being at the upstream-side relay position **P1.**

Note that in the relay device **150,** as the distance in the conveying direction between the upstream-side portion **1u** and the downstream-side portion **1d** of the multi-core shielded cable **1** (hereinafter referred to also as the pitch between the opposite ends of the multi-core shielded cable **1**) is narrowed, the second-step processing device **10B** is configured to accommodate the multi-core shielded cable **1** with the narrow pitch between the opposite ends. This shortens the length in the conveying direction of the second-step processing device **10B.**

### [Controller]

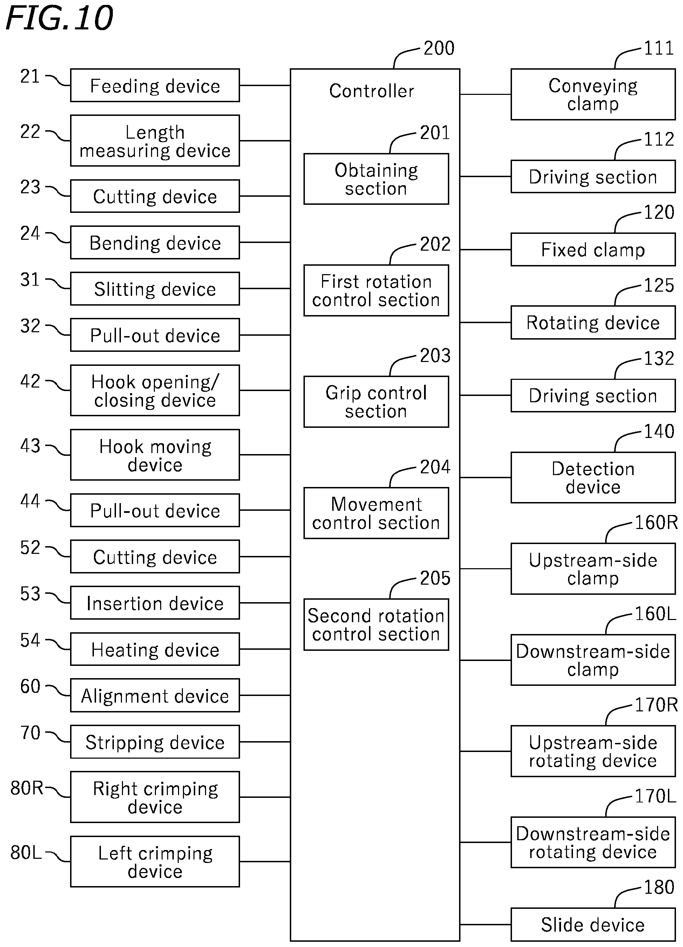

FIG. **10** is a block diagram of the processing device **10.** As shown in FIG. **10****,** the processing device **10** includes the controller **200** that controls the first-step processing device **10A,** the second-step processing device **10B,** the detection device **140,** the positioning device **100,** and the relay device **150.** More specifically, the controller **200** is connected to the feeding device **21,** the length measuring device **22,** the cutting device **23,** and the bending device **24** of the cut-and-shape device **20,** the slitting device **31** and the pull-out device **32** of the semi-stripping device **30,** the hook opening/closing device **42,** the hook moving device **43,** and the pull-out device **44** of the core wire separation device **40,** the cutting device **52,** the insertion device **53,** and the heating device **54** of the tube attaching device **50,** the alignment device **60,** the stripping device **70,** the right crimping device **80R,** and the left crimping device **80L.** Moreover, connected to the controller **200** are the conveying clamp **111,** the driving section **112,** the fixed clamps **120** (the driving sections **122L** and **122R**), and the rotating device **125** of the conveying device **110,** the driving section **132** of the shuttle conveying device **130,** and the upstream-side clamp **160R** (the driving section **162R**), the downstream-side clamp **160L** (the driving section **162L**), the upstream-side rotating device **170R** (the air cylinder **172R**), the downstream-side rotating device **170L** (the air cylinder **172L**), and the slide device **180** (the air cylinder **183**) of the relay device **150** or the positioning device **100.** The processing device **10** may also include other devices controlled by the controller **200,** but those are not shown in the figures or described here.

There is no particular limitation on the configuration of the controller **200.** The controller **200** may, for example, include a central processing unit (hereinafter referred to as a CPU), a ROM storing therein a program executed by the CPU etc., a RAM, etc. These sections of the controller **200** may each be implemented by software or may be implemented by hardware. Moreover, these sections may each be a processor or a circuit. The controller **200** may be, for example, a programmable controller or a computer.

As shown in FIG. **10****,** the controller **200** includes an obtaining section **201** that is connected to the detection device **140** and obtains the detection results from the detection device **140.** Moreover, the controller **200** includes a first rotation control section **202** as a control section for controlling the rotating device **125,** and a grip control section **203,** a movement control section **204,** and a second rotation control section **205** as control sections for controlling the relay device **150.** Although the controller **200** also includes control sections for controlling devices other than the rotating device **125** and the relay device **150,** but those are not shown in the figures or described here.

The first rotating control section **202** controls the rotating device **125** (the rotating device **125** that moves the fixed clamp **120A** forward of the core wire separation device **40**) based on the detection by the detection device **140,** and rotates the multi-core shielded cable **1** so that the drain wire **3** faces toward the detection device **140.** Here, the first rotation control section **202** successively rotates the upstream-side portion **1u** and the downstream-side portion **1d** of the multi-core shielded cable **1** so that the drain wire **3** faces toward the detection device **140** based on the detection by the detection device **140.**

The grip control section **203** controls the upstream-side clamp **160R** and the downstream-side clamp **160L** of the relay device **150** to grip the upstream-side portion **1u** and the downstream-side portion **1d** of the multi-core shielded cable **1,** respectively. After the upstream-side portion **1u** and the downstream-side portion **1d** are rotated, the grip control section **203** controls the upstream-side clamp **160R** and the downstream-side clamp **160L** to release the upstream-side portion **1u** and the downstream-side portion **1d.**

After the multi-core shielded cable **1** has been received from the first-step processing device **10A** at the upstream-side relay position **P1,** the movement control section **204** controls the slide device **180** to move the upstream-side clamp **160R** and the downstream-side clamp **160L** from the upstream-side relay position **P1** to the downstream-side relay position **P2.** When the process of handing over the multi-core shielded cable **1** to the second-step processing device **10B** is complete at the downstream-side relay position **P2,** the movement control section **204** controls the slide device **180** to move the upstream-side clamp **160R** and the downstream-side clamp **160L** from the downstream-side relay position **P2** to the upstream-side relay position **P1.**

The second rotation control section **205** controls the upstream-side rotating device **170R** to rotate the upstream-side portion **1u** of the multi-core shielded cable **1,** and moves the drain wire **3** at the upstream-side end portion to a predetermined position around the upstream-side rotation shaft **171R.** Moreover, the second rotation control section **205** controls the downstream-side rotating device **170L** to rotate the downstream-side portion **1d** of the multi-core shielded cable **1,** and moves the drain wire **3** at the downstream-side end portion to a predetermined position around the downstream-side rotation shaft **171L.** Specifically, the upstream-side rotating device **170R** rotates the upstream-side portion **1u** of the multi-core shielded cable **1** so that the drain wire **3** moves to the most upstream position in the conveying direction among the drain wire **3** and the plurality of core wires **4.** Moreover, the downstream-side rotating device **170L** rotates the downstream-side portion **1d** of the multi-core shielded cable **1** so that the drain wire **3** moves to the most downstream position in the conveying direction among the drain wire **3** and the plurality of core wires **4.** In the present embodiment, the second rotation control section **205** controls the upstream-side rotating device **170R** and the downstream-side rotating device **170L** to move the drain wire **3** at the upstream-side end portion to a predetermined position in the circumferential direction while the upstream-side clamp **160R** and the downstream-side clamp **160L** are moved from the upstream-side relay position **P1** to the downstream-side relay position **P2** by the control of the movement control section **204.**

In the present embodiment, the rotation angle of the multi-core shielded cable **1** at the relay device **150** is determined by the mechanism of the relay device **150,** and does not involve electrical position control. However, the above control may be performed by electrical position control. In that case, the upstream-side rotating device **170R** and the downstream-side rotating device **170L** may include a servomotor or a stepping motor, for example. The "control of the upstream-side rotating device **170R** and the downstream-side rotating device **170L"** may include timing control without position control, as in the present embodiment, as well as control with position control.

The controller **200** controls the positioning device **100** (here, the rotating device **125,** the upstream-side rotating device **170R,** and the downstream-side rotating device **170L**) based on the detection results from the detection device **140,** and moves the upstream-side and downstream-side drain wires **3** to predetermined positions around the upstream-side rotation shaft **171R** and the downstream-side rotation shaft **171L,** respectively. The controller **200** drives the upstream-side rotating device **170R** and the downstream-side rotating device **170L** immediately before the multi-core shielded cable **1** is handed over to the second-step processing device **10B.** Thus, the upstream-side and downstream-side drain wires **3** are moved to predetermined positions around the upstream-side rotation shaft **171R** and the downstream-side rotation shaft **171L,** respectively.

### [Processing of multi-core shielded cable]

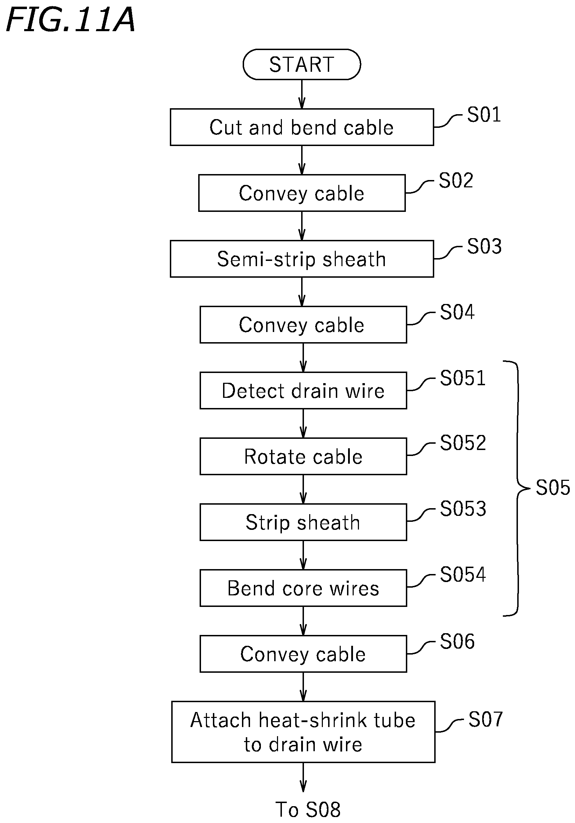

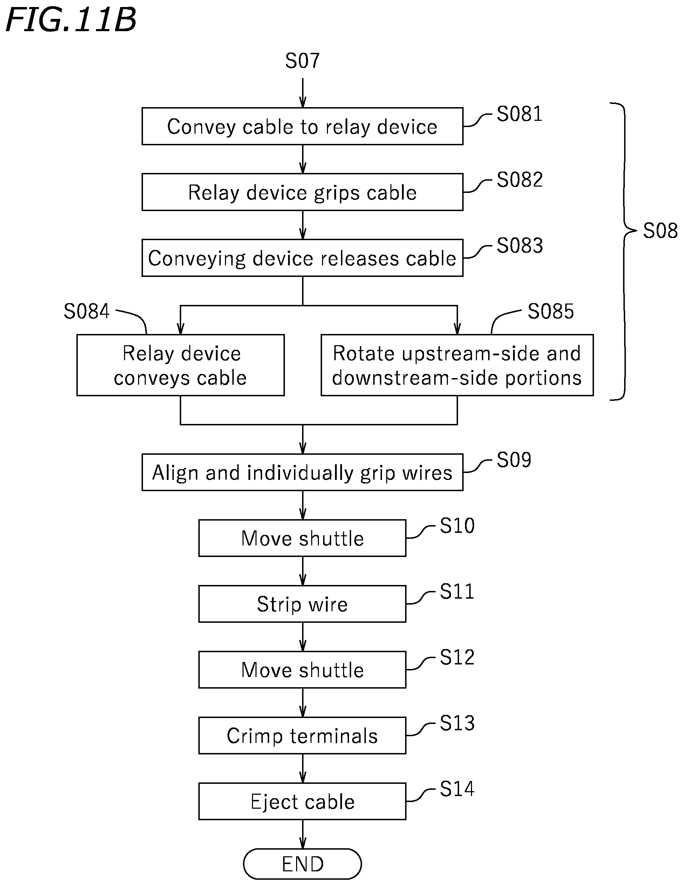

Hereinafter, the processing of the multi-core shielded cable **1** will be described with reference to flow charts. FIG. **11A** and FIG. **11B** are flow charts showing the process of the multi-core shielded cable **1.** In FIGS. **11A****,** **11B** and the description thereof, the details of the steps are omitted, except for the step of rotating in the core wire separation step and relaying the multi-core shielded cable **1.** In FIGS. **11A** and **11B****,** the multi-core shielded cable **1** is referred to simply as "cable".

As shown in FIG. **11A****,** in step S01 of the processing process of the multi-core shielded cable **1,** the multi-core shielded cable **1** is cut to a predetermined length and bent into a U-letter shape by the cut-and-shape device **20.** In step S02, the multi-core shielded cable **1** is conveyed downstream in the conveying direction and moved to a position forward of the semi-stripping device **30.** In step S03, the sheath **2** of the multi-core shielded cable **1** is semi-stripped. Note that although it is omitted in the description of the steps and FIGS. **11A****,** **11B****,** the semi-stripping of the sheath **2** is performed successively on the downstream-side portion **1d** and the upstream-side portion **1u** of the multi-core shielded cable **1,** which is bent in a U-letter shape. This similarly applies also to other processing steps. In step S04, the multi-core shielded cable **1** is conveyed forward of the core wire separation device **40.** In step S05, the core wires **4** of the multi-core shielded cable **1** are separated by the core wire separation device **40.** While the core wires **4** of the downstream-side portion **1d** are separated, the sheath **2** of the upstream-side portion **1u** may be semi-stripped at the same time. This similarly applies also to other successive processes. Note however that the process for the downstream-side portion **1d** and the process for the upstream-side portion **1u** do not need to be performed simultaneously.

Step S05 includes step S051 of detecting the position of drain wire **3,** step S052 of rotating the multi-core shielded cable **1** based on the detected position of the drain wire **3,** step S053 of completely pulling out the sheath **2,** and step S054 of bending the core wires **4** at the downstream-side end portion. In step S051, the position of the drain wire **3** in the circumferential direction is identified by the detection device **140.** In step S052, the multi-core shielded cable **1** is rotated so that the drain wire **3** is at the 0 o'clock position by moving the left clamp **120L** and the right clamp **120R** of the fixed clamp **120A** so that they are shifted from each other in the up-down direction. The detection device **140** confirms that the drain wire **3** has reached the 0 o'clock position. In step S053, the sheath **2** on the tip side of the cut is pulled out of the multi-core shielded cable **1.** In step S054, the hooks **41** are hooked onto the core wires **4** and the core wires **4** are bent downward.

In step S06, the multi-core shielded cable **1** is conveyed and moved to a position forward of the tube attaching device **50.** In step S07, the heat-shrink tube **6** is attached to the drain wire **3.** This completes the process by the first-step processing device **10A.**

In step S08, the multi-core shielded cable **1** is conveyed from the first-step processing device **10A** to the second-step processing device **10B** via the relay device **150.** Step S08 includes step S081 of conveying the multi-core shielded cable **1** by the conveying device **110** to a position opposing the relay device **150,** step S082 in which the relay device **150** grips the multi-core shielded cable **1,** step S083 in which the conveying device **110** releases the multi-core shielded cable **1,** step S084 of conveying the multi-core shielded cable **1** with the relay device **150,** and step S085 of rotating the upstream-side portion **1u** and the downstream-side portion **1d** of the multi-core shielded cable **1.** Before step S082, the upstream-side clamp **160R** and the downstream-side clamp **160L** of the relay device **150** have been moved to the upstream-side relay position **P1.** Here, steps S084 and S085 are performed simultaneously.

The detailed description of steps S081 to S083 is omitted. In step S084, the multi-core shielded cable **1** is conveyed to the downstream-side relay position **P2.** In step S085, which is performed simultaneously with step S084, the upstream-side clamp 160R and the downstream-side clamp **160L** are rotated 90 degrees inward in the conveying direction of the relay device **150.** Thus, the drain wire **3** and the plurality of core wires **4** at the upstream-side end portion are arranged side by side so that the drain wire **3** is located at the most upstream (outermost) position. Moreover, the drain wire **3** and the plurality of core wires **4** at the downstream-side end portion are arranged side by side so that the drain wire **3** is located at the most downstream (outermost) position. Furthermore, the distance in the conveying direction between the upstream-side portion **1u** and the downstream-side portion **1d** (the pitch between the opposite ends) of the multi-core shielded cable **1** is shortened.

In step S09, the drain wire **3** and the core wires **4** at the upstream-side end portion and the downstream-side end portion are pushed into the gripping portion **131a** of the shuttle **131** by the alignment device **60.** Thus, the drain wires **3** and the plurality of core wires **4** on the upstream and downstream side are individually gripped while being aligned so that they are arranged side by side in a predetermined order in the conveying direction.

In step S10, the shuttle **131** is moved downstream in the conveying direction, and the multi-core shielded cable **1** is moved to a position forward of the stripping device **70.** In step S11, the heat-shrink tube **6** covering the drain wire **3** and the cover **4b** of the core wires **4** are stripped by the stripping device **70.** The stripping in step S11 is performed sequentially for the drain wire **3** and the core wires **4.** At this time, the drain wire **3** is located at the most downstream or upstream side in the conveying direction. Therefore, the stripping device **70** performs the stripping process set for the drain wire **3** for the electric wire (the number of electric wires is known in advance, and it is the first or last electric wire) located at the most downstream or upstream side in the conveying direction. The stripping device **70** performs the stripping process set for the core wires **4** for the other electric wires.

In step S12, the shuttle **131** is moved so that the multi-core shielded cable **1** is located forward of the crimping device **80.** In step S13, the terminal **7** is crimped to the drain wire **3** and the plurality of core wires **4** by the crimping device **80.** The crimping in step S13 is also performed sequentially for the drain wire **3** and the core wires **4.** Therefore, also in the crimping step, the position (order) of the drain wire **3** is determined, and it is therefore possible to easily and reliably perform the step.

In step S14, the multi-core shielded cable **1** is ejected. This completes the processing of the multi-core shielded cable **1.** Note that the processing flow for the multi-core shielded cable **1** described above is merely one preferred example, and the processing procedure for the multi-core shielded cable **1** is not limited to this.

### [Functions/effects of embodiment]

The functions and effects that can be achieved by the processing device **10** for the multi-core shielded cable **1** according to the present embodiment will now be described.

The processing device **10** for the multi-core shielded cable **1** according to the present embodiment includes the detection device **140** that detects the position of the drain wire **3** in the circumferential direction. The positioning device **100** includes the upstream-side clamp **160R** that grips the multi-core shielded cable **1** so that its longitudinal direction coincides with the orthogonal direction, and the upstream-side rotating device **170R** that rotates the multi-core shielded cable **1** gripped by the upstream-side clamp **160R** around the upstream-side rotation shaft **171R** that extends in the orthogonal direction. The controller **200** controls the positioning device **100** based on the detection results from the detection device **140,** and moves the upstream-side drain wire **3** to a predetermined position around the upstream-side rotation shaft **171R.** Here, the controller **200** drives the rotating device **125** and the upstream-side rotating device **170R** to thereby move the upstream-side drain wire **3** to a predetermined position around the upstream-side rotation shaft **171R.**

Of the processing for the multi-core shielded cable **1,** the processing of the tip portion of the drain wire **3** and the core wires **4** is performed individually for each electric wire. Therefore, it is preferred that the drain wire **3** and the core wires **4** are recognized individually before the processing by the second-step processing device **10B.** Since the processing for the drain wire **3** and the processing for the core wires **4** are different in many cases, it is preferred that at least the drain wire **3** and the core wires **4** are recognized separately. In the processing by the second-step processing device **10B,** such as stripping or crimping, the process conditions may be made different for the drain wire **3** and for the core wires **4,** and distinguishing between the drain wire **3** and the core wires **4** makes it easier to set the process conditions. With the processing device **10** according to the present embodiment, the multi-core shielded cable **1** is rotated so that the drain wire **3** is moved to a predetermined position in the circumferential direction before being conveyed to the second-step processing device **10B** that performs the processing of the tip portion. Based on the position of the drain wire **3** after being moved, it is possible to distinguish the drain wire **3** from the core wires **4.**

Note that while the upstream-side clamp **160R** and upstream-side rotating device **170R** are used as examples in above description of the functions and effects, the functions and effects achieved by the downstream-side clamp **160L** and the downstream-side rotating device **170L** are the same.

In the present embodiment, the upstream-side rotating device **170R** rotates the multi-core shielded cable **1** so that the drain wire **3** moves to the most upstream position in the conveying direction among the drain wire **3** and the core wires **4.** The downstream-side rotating device **170L** rotates the multi-core shielded cable **1** so that the drain wire **3** moves to the most downstream position in the conveying direction among the drain wire **3** and the core wires **4.** With such a processing device **10,** the drain wire **3** is located at the end of the second-step processing device **10B** in the conveying direction. Thus, the processing for the drain wire **3** is the first or last among the drain wire **3** and the core wires **4.** Therefore, where the processing for the drain wire **3** and the processing for the core wires **4** are different, the number of setup changes can be minimized.

In the present embodiment, the detection device **140** is configured to detect the position of the drain wire **3** in the circumferential direction while the multi-core shielded cable **1** is gripped by the fixed clamp **120A** of the first-step processing device **10A.** The controller **200** controls the rotating device **125** based on the detection by the detection device **140** to rotate the multi-core shielded cable **1** so that the drain wire **3** faces toward the detection device **140,** and then control the upstream-side rotating device **170R** and the downstream-side rotating device **170L** to move the upstream-side and downstream-side drain wires **3** to predetermined positions.

With such a processing device **10,** the position in the circumferential direction of the drain wire **3,** which is gripped by the fixed clamp **120A** of the first-step processing device **10A,** is detected by the detection device **140,** and the position of the drain wire **3** in the circumferential direction is set to a position that faces toward the detection device **140.** This determines the position of the drain wire **3** in the circumferential direction, and therefore makes easier the processing of the drain wire **3** and the core wires **4** in the first-step processing device **10A** (here, the core wire separation step and the heat-shrink tube attaching step). In the first-step processing device **10A,** the position of the drain wire **3** in the circumferential direction is set to a position that faces toward the detection device **140,** thus enabling accurate positioning of the drain wire **3.** Since the drain wire **3** can be accurately positioned in the first-step processing device **10A,** positioning of the drain wire **3** in the relay device **150** can also be done accurately.

With the processing device **10** according to the present embodiment, the position of the drain wire **3** in the circumferential direction is determined by the action of the rotating device **125,** and it is therefore possible to easily attach the heat-shrink tube **6.** As a result, it is possible to improve the processing efficiency of the processing device **10.**

With the processing device **10** according to the present embodiment, the position of the drain wire **3** can be determined at the opposite end portions of the multi-core shielded cable **1,** which is bent in a U-letter shape, to successively process the opposite end portions. Therefore, the drain wire **3** and the core wires **4** can be distinguished from each other at both ends of the multi-core shielded cable **1.** By bending the multi-core shielded cable **1** in a U-letter shape, the opposite end portions can be processed simultaneously, and the processing efficiency of the processing device **10** can be improved.

In the present embodiment, the upstream-side rotation shaft **171R** is provided so as to be off the line extending along the axis of the upstream-side portion **1u** of the multi-core shielded cable **1** while the upstream-side clamp **160R** is gripping the upstream-side portion **1u.** The upstream-side rotating device **170R** is configured to rotate the upstream-side clamp **160R** around the upstream-side rotation shaft **171R,** and rotates the upstream-side clamp **160R** so that the line extending along the axis of the upstream-side portion **1u** moves downstream in the conveying direction. The downstream-side rotation shaft **171L** is provided so as to be off the line extending along the axis of the downstream-side portion **1d** of the multi-core shielded cable **1** while the downstream gripping clamp **160L** is gripping the downstream-side portion **1d.** The downstream-side rotating device **170L** is configured to rotate the downstream-side clamp **160L** around the downstream-side rotation shaft **171L,** and rotates the downstream-side clamp **160L** so that the line extending along the axis of the downstream-side portion **1d** moves upstream in the conveying direction.

With such a processing device **10,** the opposite ends of the multi-core shielded cable **1** move closer to each other in the conveying direction, and the distance between the opposite ends becomes narrower. Therefore, it is possible to shorten the length of the second-step processing device **10B** in the conveying direction, thereby improving the space efficiency. Note that the same effect can be achieved by only rotating the downstream-side portion **1d** to the upstream side or by only rotating the upstream-side portion **1u** to the downstream side.

In the present embodiment, the upstream-side clamp **160R** and the downstream-side clamp **160L** are provided in the relay device **150.** The relay device **150** is configured to, by means of the upstream-side clamp **160R** and the downstream-side clamp **160L,** receive the multi-core shielded cable **1** from the first-step processing device **10A,** and hand over the multi-core shielded cable **1** to the second-step processing device **10B.**

With such a processing device **10,** the positioning device **100** and the relay device **150** are partially shared. This allows the processing device **10** to be made more compact, thereby improving the space efficiency. It is also possible to reduce the number of parts in the processing device **10,** thereby reducing costs.

In the present embodiment, the controller **200** controls the slide device **180** to move the clamps **160R** and **160L** from the upstream-side relay position **P1** to the downstream-side relay position **P2,** and controls the upstream-side rotating device **170R** and the downstream-side rotating device **170L** to move the upstream-side and downstream-side drain wires **3** while the clamps **160R** and **160L** are moved from the upstream-side relay position **P1** to the downstream-side relay position **P2.**

With such a processing device **10,** it is possible to position the drain wire **3** in the circumferential direction while moving the multi-core shielded cable **1** in the conveying direction. Thus, it is possible to shorten the cycle time for processing the multi-core shielded cable **1.**

### [Variation]

A variation of the embodiment described above will now be described. In the following description of a variation and other embodiments, the same reference signs as those used in the embodiment described above will be used for components that perform the same functions as those in the embodiment described above. Any redundant descriptions will be omitted or simplified.

In this variation, the controller **200** is configured to be capable of controlling the bending device **24** so that the position of the upstream tip of the multi-core shielded cable **1** (the tip of the upstream-side portion **1u**) and the position of the downstream tip of the multi-core shielded cable **1** (the tip of downstream-side portion **1d**) are shifted from each other by a predetermined distance in the orthogonal direction. In order to achieve this, the pair of conveying clamps **111** forward of the cut-and-shape device **20** are each configured to be able to move their positions in the front-rear direction. By shifting, in the orthogonal direction, the position of the upstream tip and the position of the downstream tip of the multi-core shielded cable **1,** which is bent in a U-letter shape, the sheath strip length of the upstream-side end portion and the sheath strip length of the downstream-side end portion can be made different from each other. This allows the length of the electric wire that is exposed at the upstream-side end portion and the length of the electric wire that is exposed at the downstream-side end portion to be different from each other. The semi-stripping device **30** cuts the sheath **2** at the upstream-side end portion and the sheath **2** at the downstream-side end portion at the same position in the orthogonal direction. For the devices from the semi-stripping device **30** to the tube attaching device **50,** they can be more simply configured if the cut position of the sheath **2** is the same for both ends of the multi-core shielded cable **1.**

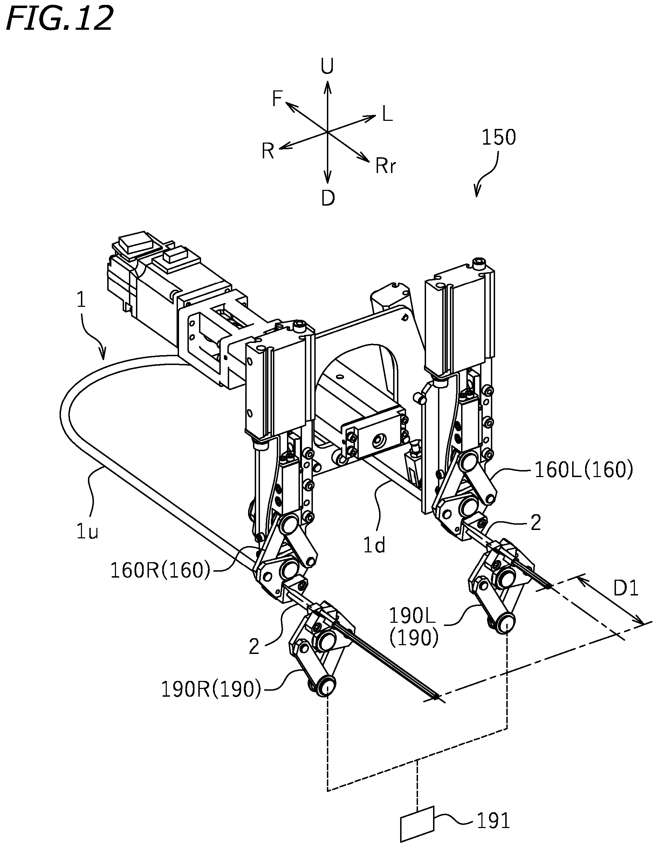

FIG. **12** is a perspective view showing the relay device **150** gripping the multi-core shielded cable **1** where the tip positions of the opposite end portions are different from each other. As shown in FIG. **12****,** when the multi-core shielded cable **1,** in which the tip positions of the opposite end portions are different from each other, is gripped by the relay device **150,** the position in the orthogonal direction of the upstream tip and the position in the orthogonal direction of the downstream tip of the multi-core shielded cable **1** are shifted from each other by a predetermined distance **D1.** Note that in this state, the tip position of the sheath **2** of the upstream-side portion **1u** and the tip position of the sheath **2** of the downstream-side portion **1d** are aligned for the orthogonal direction.

As shown in FIG. **12****,** in this variation, the relay device **150** includes an upstream-side adjustment clamp **190R** and a downstream-side adjustment clamp **190L.** The upstream-side adjustment clamp **190R** is provided side by side with the upstream-side clamp **160R** in the orthogonal direction, and grips the upstream-side portion **1u** of the multi-core shielded cable **1.** Here, the upstream-side adjustment clamp **190R** is arranged rearward relative to the upstream-side clamp **160R.** The downstream-side adjustment clamp **190L** is provided side by side with the downstream-side clamp **160L** in the orthogonal direction, and grips the downstream-side portion **1d** of the multi-core shielded cable **1.** The downstream-side adjustment clamp **190L** is arranged rearward relative to the downstream-side clamp **160L.** The pair of adjustment clamps **190,** including the upstream-side adjustment clamp **190R** and the downstream-side adjustment clamp **190L,** is configured to be movable in the orthogonal direction, and is moved in the orthogonal direction by a moving device **191.** Here, the pair of adjustment clamps **190** moves integrally and synchronously.

The processing device **10** according to this variation is configured to align the position in the orthogonal direction of the upstream tip of the multi-core shielded cable **1** and the position in the orthogonal direction of the downstream tip of the multi-core shielded cable **1,** by means of the relay device **150** and the pair of adjustment clamps **190.** For the devices from the alignment device **60** to the crimping device **80,** they can be more simply configured if the tip positions of the electric wires are aligned at both ends of the multi-core shielded cable **1.**

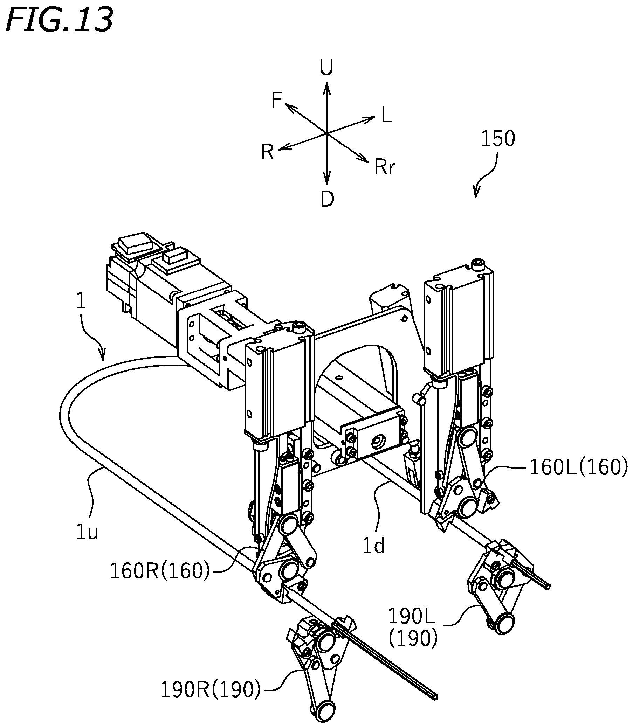

FIG. **13** is a perspective view showing the relay device **150** immediately after starting the work of aligning the tip positions of the opposite end portions of the multi-core shielded cable **1.** As shown in FIG. **13****,** in the process of aligning the tip positions of the opposite end portions of the multi-core shielded cable **1,** the adjustment clamp **190** (the adjustment clamp **190R** on the upstream side in the example of FIG. **13**) that is gripping the straight portion with the longer strip length, i.e., the one that is more protruding in the orthogonal direction (the upstream-side portion **1u** in the example of FIG. **13**), releases the multi-core shielded cable **1.** Moreover, the clamp **160** (the downstream-side clamp **160L** in the example of FIG. **13**) that is gripping the straight portion with the shorter strip length, i.e., the one that is more receding in the orthogonal direction (the downstream-side portion **1d** in the example of FIG. **13**), releases the multi-core shielded cable **1.** Thus, the straight portion that is released by the clamp **160** while being gripped by the adjustment clamp **190,** i.e., the one that is more receding in the orthogonal direction (the downstream-side portion **1d** in the example of FIG. **13**), can be moved by the movement of the adjustment clamp **190** (here, the downstream-side adjustment clamp **190L**).

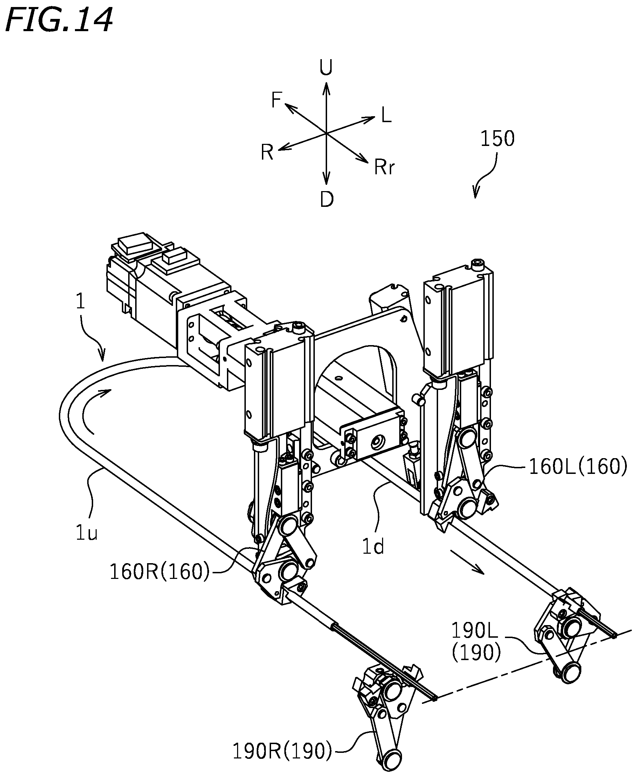

From the state shown in FIG. **13****,** the processing device **10** moves the pair of adjustment clamps **190** rearward. FIG. **14** is a perspective view of the relay device **150** after finishing aligning the tip positions of the opposite end portions of the multi-core shielded cable **1.** In the example shown in FIG. **14****,** as the pair of adjustment clamps **190** are moved, the downstream-side portion **1d** is pulled by the downstream-side adjustment clamp **190L** and moved rearward. The upstream-side adjustment clamp **190R** moves rearward without gripping the multi-core shielded cable **1.** Since the portion of the multi-core shielded cable **1** that is gripped by the upstream-side clamp **160R** of the relay device **150** is unmoved, the multi-core shielded cable **1** deforms so that the tip portion with the longer strip length is aligned with the other end (see the arrow in FIG. **14**). Thus, the position of the upstream tip and the position of the downstream tip of the multi-core shielded cable **1** are aligned for the orthogonal direction. Although not shown in the figures, thereafter, the downstream-side clamp **160L** of the relay device **150** grips again the downstream-side portion **1d** of the multi-core shielded cable **1.** The downstream-side adjustment clamp **190L** releases the downstream-side portion **1d** of the multi-core shielded cable **1.**

Note that the pair of adjustment clamps **190** may be arranged rearward of the pair of clamps **160** or may be arranged forward of the pair of clamps **160.** The moving device **191** may be configured to move the pair of clamps **160** in the orthogonal direction, or may be configured to move both the pair of clamps **160** and the pair of adjustment clamps **190** in the orthogonal direction. That is, the moving device **191** may be configured to move at least one of the pair of adjustment clamps **190** and the pair of clamps **160** in the orthogonal direction to thereby move the pair of adjustment clamps **190** relative to the pair of clamps **160** in the orthogonal direction.

The controller **200** may be configured to control one of the upstream-side clamp **160R** and the downstream-side clamp **160L** to grip the multi-core shielded cable **1,** control the other to release the multi-core shielded cable **1,** control the adjustment clamp **190** corresponding to the clamp **160** that has released the multi-core shielded cable **1** to grip the multi-core shielded cable **1,** and control the adjustment clamp **190** corresponding to the clamp **160** that is gripping the multi-core shielded cable **1** to release the multi-core shielded cable **1.** The controller **200** may be configured to control the moving device **191** to move the pair of adjustment clamps **190** relative to the pair of clamps **160** by the distance **D1** in the orthogonal direction so as to align the position of the upstream tip of the multi-core shielded cable **1** in the orthogonal direction with the position of the downstream tip of the multi-core shielded cable **1** in the orthogonal direction. For example, the pair of adjustment clamps **190** may push in the straight portion of the multi-core shielded cable **1** whose tip is more protruding in the orthogonal direction, rather than pulling the straight portion of the multi-core shielded cable **1** whose tip is more receding in the orthogonal direction.

With the processing device **10** according to this variation, even if the position of the upstream tip and the position of the downstream tip are shifted from each other when the multi-core shielded cable **1** is bent, it is possible to align the position of the upstream tip with the position of the downstream tip. Therefore, it is easier to perform processing such as crimping of the terminal **7** by the second-step processing device **10B.**

Note that the pair of adjustment clamps **190R** and **190L** may be configured to be independently movable. The function of the adjustment clamps **190** may be achieved by the conveying clamps **111.**

### [Other embodiments]

A preferred embodiment of the present invention has been described above. Note however that the embodiment described above is merely illustrative, and various other embodiments are possible. For example, in the embodiment described above, the upstream-side rotating device **170R** and the upstream-side clamp **160R** are configured to move the drain wire **3** to the most upstream position among the electric wires, and the downstream-side rotating device **170L** and the downstream-side clamp **160L** are configured to move the drain wire **3** to the most downstream position among the electric wires. However, the position to which the upstream-side rotating device **170R** moves the drain wire **3** and the position to which the downstream-side rotating device **170L** moves the drain wire **3** are not particularly limited, as long as they are predetermined positions.

In the embodiment described above, the positioning device **100** positions the drain wires **3** at opposite end portions of the multi-core shielded cable **1,** which is shaped in a U-letter shape. However, the positioning device **100** may be configured to align the drain wire **3** at one end portion of the multi-core shielded cable **1.** In that case, the multi-core shielded cable **1** does not need to be bent in a U-letter shape, and may be conveyed in a straight shape, for example. In that case, the number of clamps **160** of the positioning device **100** may be one.

In the embodiment described above, the rotating device **170** (representing one or both of the upstream-side rotating device **170R** and the downstream-side rotating device **170L**) rotates the multi-core shielded cable **1** by rotating the clamp **160.** However, the clamp **160** and the rotating device **170** may be configured similar to the fixed clamp **120A** and the rotating device **125** as shown in FIG. **5****,** for example, to rotate the multi-core shielded cable **1** without rotating the clamp **160.** Alternatively, the clamp **160** may rotate around the axis of the multi-core shielded cable **1** while the multi-core shielded cable **1** is gripped. In that case, the multi-core shielded cable **1** rotates without wobbling around the axis. There is no particular limitation on the method by which the relay device **150** rotates the multi-core shielded cable **1.**

In the embodiment described above, the rotation of the multi-core shielded cable **1** based on the detection of the detection device **140** is performed in the first-step processing device **10A.** However, the rotation of the multi-core shielded cable **1** based on the detection of the detection device **140** may be performed between the first-step processing device **10A** and the second-step processing device **10B.**

For example, with an alternative preferred processing device **10** for the multi-core shielded cable **1,** the detection device **140** may be configured to detect the position of the drain wire **3** in the circumferential direction while the multi-core shielded cable **1** is gripped by the clamp **160** of the relay device **150.** The controller **200** may control the rotating device **170** of the relay device **150** based on the detection by the detection device **140** and move the drain wire **3** to a predetermined position after rotating the multi-core shielded cable **1** so that the drain wire **3** faces toward the detection device **140.** Note that the clamp that grips and rotates the multi-core shielded cable **1** does not need to be the clamp of the relay device **150,** and may be another clamp arranged between the first-step processing device **10A** and the second-step processing device **10B.**

With such a processing device **10** for the multi-core shielded cable **1,** preliminary positioning of the drain wire **3** is performed so that the position of the drain wire **3** in the circumferential direction is set to a position that faces toward the detection device **140.** This preliminary positioning of the drain wire **3** may be performed accurately because the position of the drain wire **3** in the circumferential direction is a position that faces toward the detection device **140.** Since the preliminary positioning of the drain wire **3** has been performed accurately, the positioning of the drain wire **3** thereafter can also be performed more accurately.

Note that the processing device **10** may detect whether the drain wire **3** has been moved to the predetermined position in the circumferential direction by the detection device **140,** without performing the preliminary positioning of the drain wire **3** described above, to control the rotating device **170** based on the detection by the detection device **140.**

The clamp **160** does not need to be configured to be moved in the conveying direction. The relay device **150** may position the drain wire **3** at the location where the multi-core shielded cable **1** has been received from the conveying clamp **111** of the first-step processing device **10A,** and hand over the multi-core shielded cable **1** to the second-step processing device **10B.**

The multi-core cable to be processed by the processing device **10** may not be the multi-core shielded cable **1** including the drain wire **3** and one or more core wires **4.** The processing device **10** is configured to distinguish a specific electric wire from other electric wires before processing the tip portion of the electric wire, and there is no limitation on the type of the multi-core cable to be handled.

The configuration of the first-step processing device **10A** and the second-step processing device **10B** is merely an illustrative preferred configuration, and is not limited to the above. Unless otherwise specified, the embodiment described above do not limit the present invention.

### DESCRIPTION OF REFERENCE SIGNS

1 Multi-core shielded cable
1u Upstream-side portion
1d Downstream-side portion
1m Bent portion
2 Sheath
3 Drain wire
4 Core wire
6 Heat-shrink tube
7 Terminal
10 Processing device
10A First-step processing device
10B Second-step processing device
24 Bending device
60 Tube attaching device
100 Positioning device
120A Fixed clamp (second gripping device)
125 Rotating device (second rotating device)
140 Detection device
150 Relay device
160R Upstream-side clamp (first gripping device)
160L Downstream-side clamp (downstream-side first gripping device)
170R Upstream-side rotating device (first rotating device)
170L Downstream-side rotating device (downstream-side first rotating device)
171R Upstream-side rotation shaft (first rotation shaft)
171L Downstream-side rotation shaft (another first rotation shaft)
180 Slide device (second moving device)
190R Upstream-side adjustment clamp (upstream-side third gripping device)
190L Downstream-side adjustment clamp (downstream-side third gripping device)
191 Moving device (first moving device)
200 Controller
Ax Rotation shaft (second rotation shaft)
P1 Upstream-side relay position
P2 Downstream-side relay position

## Claims

1. A processing device for a multi-core shielded cable, comprising:
a first-step processing device that at least performs sheath stripping for a multi-core shielded cable including a drain wire, one or more core wire, and a sheath covering the drain wire and the core wire;
a detection device that detects a position of the drain wire for a circumferential direction of the multi-core shielded cable;
a second-step processing device arranged side by side with the first-step processing device in a predetermined conveying direction, wherein the second-step processing device performs processing of a tip portion for at least one of the drain wire and the core wire;
a positioning device including a first gripping device that grips the multi-core shielded cable so that a longitudinal direction thereof coincides with an orthogonal direction, which is orthogonal to the conveying direction, and a first rotating device that rotates the multi-core shielded cable gripped by the first gripping device around a first rotation shaft extending in the orthogonal direction;
a relay device that receives the multi-core shielded cable from the first-step processing device and hands over the multi-core shielded cable to the second-step processing device; and
a controller that controls the positioning device based on detection results from the detection device to drive at least the first rotating device and to thereby move the drain wire to a predetermined position around the first rotation shaft.

2. The processing device for a multi-core shielded cable according to claim 1, wherein the first rotating device rotates the multi-core shielded cable so that the drain wire moves to a most upstream position or a most downstream position in the conveying direction among the drain wire and the core wire.

3. The processing device for a multi-core shielded cable according to claim 1 or 2, wherein:
the positioning device includes:
a second gripping device provided in the first-step processing device that grips the multi-core shielded cable so that the longitudinal direction thereof coincides with the orthogonal direction; and
a second rotating device that rotates the multi-core shielded cable gripped by the second gripping device around a second rotation shaft extending in the orthogonal direction;
the detection device is configured to detect a position of the drain wire for the circumferential direction of the multi-core shielded cable while the multi-core shielded cable is gripped by the second gripping device; and
the controller controls the second rotating device based on detection by the detection device to rotate the multi-core shielded cable so that the drain wire faces toward the detection device, and then controls the first rotating device to move the drain wire to the predetermined position.

4. The processing device for a multi-core shielded cable according to claim 3, wherein the first-step processing device includes a tube attaching device that attaches a heat-shrink tube to the drain wire, which has been moved so as to face toward the detection device.

5. The processing device for a multi-core shielded cable according to any one of claims 1 to 4, wherein:
the first-step processing device includes a bending device that bends the multi-core shielded cable into a U-letter shape so that opposite end portions thereof are arranged side by side in the conveying direction, to form, in the multi-core shielded cable, an upstream-side portion extending in the orthogonal direction, a downstream-side portion extending in the orthogonal direction and located downstream of the upstream-side portion in the conveying direction, and a bent portion located between the upstream-side portion and the downstream-side portion;
the detection device detects a position of the drain wire on an upstream side for the circumferential direction of the upstream-side portion, and a position of the drain wire on a downstream side for the circumferential direction of the downstream-side portion;
the first gripping device is configured to grip the upstream-side portion of the multi-core shielded cable;
the first rotating device is configured to rotate the upstream-side portion of the multi-core shielded cable;
the positioning device includes:
a downstream-side first gripping device provided on a downstream side in the conveying direction relative to the first gripping device to grip the downstream-side portion of the multi-core shielded cable; and
a downstream-side first rotating device that rotates the downstream-side portion gripped by the downstream-side first gripping device around another first rotation shaft extending in the orthogonal direction; and
the controller controls the downstream-side first rotating device to move the drain wire on the downstream side to a predetermined position around the other first rotation shaft.

6. The processing device for a multi-core shielded cable according to claim 5, wherein:
the first rotation shaft is provided so as to be off a line extending along an axis of the upstream-side portion while the first gripping device is gripping the upstream-side portion of the multi-core shielded cable; and
the first rotating device is configured to rotate the first gripping device around the first rotation shaft, and rotates the first gripping device so that the line extending along the axis of the upstream-side portion moves downstream in the conveying direction.

7. The processing device for a multi-core shielded cable according to claim 5 or 6, wherein:
the other first rotation shaft is provided so as to be off a line extending along an axis of the downstream-side portion while the downstream-side first gripping device is gripping the downstream-side portion of the multi-core shielded cable; and
the downstream-side first rotating device is configured to rotate the downstream-side first gripping device around the other first rotation shaft, and rotates the downstream-side first gripping device so that the line extending along the axis of the downstream-side portion moves upstream in the conveying direction.

8. The processing device for a multi-core shielded cable according to any one of claims 5 to 7, further comprising:
an upstream-side third gripping device that is provided side by side with the first gripping device in the orthogonal direction, and grips the upstream-side portion of the multi-core shielded cable;
a downstream-side third gripping device that is provided side by side with the downstream-side first gripping device in the orthogonal direction, and grips the downstream-side portion of the multi-core shielded cable; and
a first moving device that moves at least one of a pair of third gripping devices including the upstream-side third gripping device and the downstream-side third gripping device and a pair of first gripping devices including the first gripping device and the downstream-side first gripping device in the orthogonal direction to thereby move the pair of third gripping devices relative to the pair of first gripping devices in the orthogonal direction, wherein:
the controller is configured to be capable of controlling the bending device so that a position of an upstream tip of the multi-core shielded cable and a position of a downstream tip of the multi-core shielded cable are shifted from each other by a predetermined distance in the orthogonal direction, and where the position of the upstream tip of the multi-core shielded cable and the position of the downstream tip of the multi-core shielded cable are shifted from each other by the predetermined distance, the controller is configured to:
control one of the first gripping device and the downstream-side first gripping device to grip the multi-core shielded cable, and control the other to release the multi-core shielded cable;
control the third gripping device, among the upstream-side third gripping device and the downstream-side third gripping device, corresponding to the first gripping device that has released the multi-core shielded cable to grip the multi-core shielded cable, and control the third gripping device corresponding to the first gripping device that is gripping the multi-core shielded cable to release the multi-core shielded cable; and
further control the first moving device to move the pair of third gripping devices relative to the pair of first gripping devices by the predetermined distance in the orthogonal direction so as to align a position of the upstream tip of the multi-core shielded cable in the orthogonal direction with a position of the downstream tip of the multi-core shielded cable in the orthogonal direction.

9. The processing device for a multi-core shielded cable according to any one of claims 1 to 8, wherein:
the first gripping device is provided in the relay device; and
the relay device uses the first gripping device to receive the multi-core shielded cable from the first-step processing device, and hand over the multi-core shielded cable to the second-step processing device.

10. The processing device for a multi-core shielded cable according to claim 9, wherein:
the relay device further includes a second moving device that moves the first gripping device between an upstream-side relay position, at which the multi-core shielded cable is relayed between the first-step processing device and the first gripping device, and a downstream-side relay position, at which the multi-core shielded cable is relayed between the first gripping device and the second-step processing device; and
the controller controls the second moving device to move the first gripping device from the upstream-side relay position to the downstream-side relay position, and drives the first rotating device to move the drain wire to the predetermined position while the first gripping device is moved from the upstream-side relay position to the downstream-side relay position.

11. The processing device for a multi-core shielded cable according to claim 1, wherein the controller controls the first rotating device based on detection by the detection device to rotate the multi-core shielded cable so that the drain wire faces toward the detection device, and then move the drain wire to the predetermined position.
